# EUROPÄISCHE PATENTSCHRIFT

(11) **EP 0 670 910 B1**
(45) Veröffentlichungstag und Bekanntmachung des Hinweises auf die Patenterteilung: **27.05.1998**
(21) Anmeldenummer: 94901906.1
(22) Anmeldetag: 29.11.1993
(51) Int. Cl.: C21B 13/14

(54) **VERFAHREN ZUR HERSTELLUNG VON ROHEISEN AUS EISENERZEN UND VORRICHTUNG ZUR THERMISCHEN UND/ODER CHEMISCHEN BEHANDLUNG EINES LEICHT ZERFALLENDEN MATERIALS ODER ZUR HERSTELLUNG VON ROHEISEN MITTELS DIESES VERFAHRENS**
PROCESS AND DEVICE FOR PRODUCING PIG IRON FROM IRON ORE OR FOR THERMALLY AND/OR CHEMICALLY TREATING AN EASILY DECOMPOSABLE MATERIAL
PROCEDE ET DISPOSITIF DE PRODUCTION DE FONTE BRUTE A PARTIR DU MINERAI DE FER OU DE TRAITEMENT THERMIQUE ET/OU CHIMIQUE D'UN MATERIAU AISEMENT DECOMPOSABLE

(30) Priorität: 30.11.1992 DE 4240197
(43) Veröffentlichungstag der Anmeldung: 13.09.1995
(73) Patentinhaber: VULETIC, Bogdan, D-40213 Düsseldorf (DE)
(72) Erfinder: VULETIC, Bogdan, D-40213 Düsseldorf (DE); VULETIC, Bojan, D-80331 München (DE); VULETIC, Vladan, D-80469 München (DE)
(74) Vertreter: Finck, Dieter, Dr.Ing.
(86) Internationale Anmeldenummer: EP9303340
(87) Internationale Veröffentlichungsnummer: WO9412672

(56) Entgegenhaltungen:
- EP-A- 0 001 814
- DE-C- 618 184
- GB-A- 346 874
- US-A- 1 592 863
- US-A- 1 891 850
- US-A- 2 265 812
- PATENT ABSTRACTS OF JAPAN vol. 12, no. 279 (C-517)1. August 1988 & JP,A,63 060 214 (NIPPON KOKAN) 16. März 1988

## Beschreibung

Die Erfindung betrifft ein Verfahren zur Herstellung von Roheisen aus Eisenerzen, wobei die Eisenerze und gegebenenfalls zugegebene Zuschlagstoffe ein von unten nach oben von heißem Reduktionsgas durchströmtes Reduktionsaggregat von oben nach unten durchwandern und das Reduktionsprodukt am unteren Ende des Reduktionsaggregats entnommen und einem seiner Weiterbehandlung dienenden Aggregat zugeführt wird, wobei das Reduktionsgas in einem Gaserzeuger durch partielle Oxidation von Kohlenstoffträgern oder Spalten von Erdgas oder Erdöl erzeugt wird, sowie eine Vorrichtung zur thermischen und/oder chemischen Behandlung eines leicht zerfallenden Erzmaterials oder zur Herstellung von Roheisen mittels dieses Verfahrens, mit einem ersten Aggregat zur Erzeugung eines heißen Gases, insbesondere eines Reduktionsgases, und einem zweiten Aggregat zur Aufnahme des thermisch und/oder chemisch zu behandelnden Materials, mit mindestens einem im oberen Abschnitt des zweiten Aggregats angeordneten Materialeinlaß und mindestens einer am unteren Ende des zweiten Aggregats angeordneten Austragvorrichtung zur Entnahme des thermisch und/ oder chemisch behandelten Materials, sowie mit mindestens einem im unteren Bereich des zweiten Aggregats angeordneten Einlaß für das heiße Gas.

Seit langem ist es bekannt, daß Eisenerz in Form von Pellets, Klumpen oder Stückerz in einem Schachtofen in Eisenschwamm überführt werden kann, indem man ein heißes Reduktionsgas von unten nach oben durch ein absteigendes Bett von Erzteilchen strömen läßt.

Technische Schwierigkeiten und ökonomische Probleme bereitet dagegen die Reduktion des Erzes, wenn es in feinkörniger Form vorliegt. Zwar ist es bereits vorgeschlagen worden, feinkörniges Erz in einem Wirbelschicht-Reduktionsreaktor zu Eisenschwamm zu reduzieren, wobei die feinen Erzpartikel in einem heißen Reduktionsgas suspendiert sind. Es ist aber ebenso bekannt, daß beim Erreichen es Reduktionsgrades von über 60% bei einem solchen Verfahren die feinen Eisenschwammpartikel zu agglomerieren beginnen und daß mit steigendem Reduktionsgrad große Cluster gebildet werden, die die Gaspfade durch das Erz zusetzen und meistens zum Scheitern dieser Verfahrensweise führen.

Ein weiterer Nachteil dieser bekannten Verfahren ist der große Materialverlust durch Staubaustrag und ein hoher Energieaufwand. Der Staub entsteht vor allem im unteren Reduktionsaggregatbereich und kann mit zusätzlichem, aus dem Gaserzeuger stammendem Staub angereichert werden. Das Reduktionsgas transportiert diesen Staub mit sich.

Das Produkt dieser Direktreduktionsanlagen ist der stückige oder zu Briketts verdichtete Eisenschwamm, der in Elektroöfen oder anderen Aggregaten eingeschmolzen wird.

Ein neueres, industriell realisiertes, in der DE-PS 28 43 303 beschriebenes Verfahren benötigt als Ausgangsmaterial wie die herkömmliche Hochofenroute ausgesiebte Stückerze und zu Pellets oder Sinter verarbeitetes Feinerz. Letzteres erfordert jedoch zusätzliche Investitionen und einen höheren Energieaufwand. Das Verfahren besteht darin, daß der Eisenschwamm aus dem Schachtofen heiß ausgetragen und in einem Einschmelzvergaser unter Verwendung von Kohle als Energieträger und Sauerstoff als Oxidationsmittel eingeschmolzen wird. Das im Einschmelzvergaser beim Schmelzprozeß erzeugte Gas wird nach Entstaubung in einem Zyklon und Teilstromkühlung in einem Wäscher als Reduktionsgas für den Reduktionsschacht verwendet. Der heiße, im Zyklon ausgeschiedene Staub wird in den Einschmelzvergaser zurückgeführt und mit Hilfe eines Sauerstoffbrenners vergast. Die Rückführung und Vergasung des ca. 800°C heißen Staubes ist nicht unproblematisch und jede Störung bei diesem System führt zu Problemen im Reduktionsschacht, da er nur begrenzte Mengen an Staub aufnehmen kann, obwohl er nur mit stückigen Eisenoxiden betrieben wird.

Die Hochofenroute erfordert Koks als Energieträger, dessen Produktion den im Roheisenproduktionsprozeß die Umwelt am meisten belastenden Schritt darstellt, der einen enormen Anstieg der Produktionskosten zur Folge hat. Außerdem ist ein Mangel an verkokbarer Kohle annehmbarer Qualität schon heute bemerkbar. Im Gegensatz zum Hochofen wird bei dem vorstehend erwähnten neueren, unter der Bezeichnung COREX bekannten Verfahren schon Koks durch herkömmliche Kohle ersetzt, jedoch benötigt COREX weiterhin grobkörniges Eisenoxid.

US-A-2 265 812 und GB-A-346 874 offerbaren einen Reduktionsschacht zum Reduzieren von Metallerz, welches im Schacht in Gegenstrom zu nach den strömenden Reduktionsgas über schräge, kaskadenartig gestaffelte Böden langsam nach unten befördert wird. Im Fall der US-A ist keine eigene Fördereinrichtung oberhalb der Böden vorgesehen, im Fall der GB-A weisen die Böden keine Gasdurchtrittsöffnungen auf.

Der Erfindung liegt die Aufgabe zugrunde, ein neues Verfahren zur Erzeugung von Roheisen auf Feinerzbasis zu schaffen, das den direkten Einsatz von Feinerz ohne vorherige Aufbereitung bzw. Umformung, und darüber hinaus die unveränderte Verwendung von Erz in dem in den Erzminen vorkommenden, meist 60 - 100% Feinerzanteil aufweisenden Verhältnis von feinem und grobem Erz gestattet. Dabei sollen Pelletier- und Sinteranlagen ebenso wie Mahlanlagen für grobe Erze entbehrlich sein und es soll als Energie-bzw. Kohlenstoffträger Kohle geeignet, jedoch zur Nutzung vorhandener Anlagen Koks nicht ausgeschlossen sein.

Insbesondere soll das neue Verfahren die Agglomeratbildung im Reduktionsbereich und einen hohen Staubaustrag verhindern.

Eine wesentliche Aufgabe besteht auch darin, das Verfahren so zu gestalten, daß vorhandene Vorrichtungen, insbesondere Hochöfen, nach entsprechender Modifizierung zur Anpassung an das Verfahren, weiter eingesetzt werden können.

Zur Lösung dieser Aufgaben wird das eingangs genannte Verfahren so ausgestaltet, daß zur Verarbeitung von teilweise feinkörnigen Eisenerzen mit gegebenenfalls enthaltenen staubförmigen Anteilen das Einsenerz und die gegebenenfalls zuzugebenden Zuschlagstoffe im Reduktionsaggregat über eine Folge von schrägen, kaskadenförmig gestaffelten mit Gasdurchtrittsöffnungen versehenen Gasverteilerböden mit darüber angeordneten antreibbaren Fördereinrichtungen nach unten geführt werden und daß das Erz und die gegebenenfalls zuzugebenden Zuschlagstoffe nach der Körnung in Fraktionen sortiert derart in das im Reduktionsaggregat befindliche System der Gasverteilerböden eingebracht werden, daß die grobkörnige Fraktion der Erze und gegebenenfalls der Zuschlagstoffe in den oberen Abschnitt des Systems eingeführt wird, daß die feinkörnige Fraktion der Erze und gegebenenfalls deren staubförmiger Anteil in den mittleren Bereich des Systems und die feinkörnige Fraktion der gegebenenfalls zuzuführenden Zuschlagstoffe einschließlich deren gegebenenfalls staubförmigen Anteils zusammen mit der feinkörnigen bzw. staubförmigen Fraktion der Erze in den unteren Abschnitt des Systems eingebracht wird.

Diese Verfahrensweise hat den Vorteil, daß die Erze und Zuschläge durch die kaskadenförmig angeordneten Böden auf einer hin- und hergehenden, schräg abwärts führenden Bahn durch das Reduktionsaggregat wandern, wobei unterhalb der einzelnen Böden durch geeignete Wahl ihres Abstandes und ihrer Anordnung ausreichend große Gassammelräume gebildet werden, von denen aus das Reduktionsgas durch in den Gasverteilerböden ausgebildete Öffnungen in die auf den Böden aufliegende, langsam nach unten wandernde Schüttung eindringen kann. Am unteren Ende der Gasverteilerböden wandert die Schüttung nach unten auf den nächstfolgenden Gasverteilerboden, wobei sich die großen und schweren Partikel fast vertikal nach unten bewegen werden. In diesem Übergangsbereich zwischen zwei Gasverteilerböden ist die Höhe der Schüttung fast doppelt so groß wie über den Gasverteilerböden, weshalb in diesem Übergangsbereich die Gasströmung nur sehr gering ist, so daß hier kaum ein Staubaustrag, sondern bevorzugt eine Sedimentation der feinen Partikel stattfindet.

Es wird dabei im oberen Bereich der Böden ein dem sog. Festbett-Verfahren entsprechender Prozeß ablaufen, in dem die Oberflächenschicht der grobkörnigen Metallerze der Einwirkung von Kohlenmonoxid und Wasserstoff des Reduktionsgases ausgesetzt wird, so daß sich die durch die Reduktion der feinkörnigen Erze entstehenden und durch die Reduktionsgase aus dem unteren Bereich des Reduktionsaggregats mitgerissenen Eisenschwammpartikel an dieser Oberfläche festsetzen können, wodurch der prozentuale Anteil dieser feinen Eisenschwammpartikel im unteren Bereich, in dem der Verfahrensablauf dem sog. Spouting-Bed-Verfahren entspricht, reduziert wird, so daß der Clusterbildung durch Sticking (Festhaften von Partikeln) entgegengewirkt wird.

Durch das Einbringen nur des grobkörnigen Materials in den oberen Bereich des Reduktionsaggregats wird der Staubaustrag aus diesem Bereich zusammen mit dem verbrauchten Reduktionsgas am oberen Ende des Reduktionsaggregats wesentlich verringert, weil das grobkörnige Material als Filtrationsschicht dient. Außerdem legt das grobkörnige Material den längsten Weg innerhalb des Reduktionsaggregats zurück, was der Tatsache gerecht wird, daß die grobkörnige Fraktion der Metallerze zur Reduktion eine längere Einwirkungszeit der Reduktionsgase erfordert als die feinkörnige Fraktion. Wenn die feinkörnigen Metallerze im mittleren Bereich des Reduktionsaggregats eingebracht werden, ist die Außenschicht der dort anzutreffenden grobkörnigen Metallerze bereits reduziert und kann somit sofort einen Teil des feinkörnigen Materials binden, so daß dieser Teil nicht mehr von den Reduktionsgasen nach oben transportiert werden kann und - wie erwähnt - auch nicht zur Clusterbildung führen kann. Durch die intensive Durchdringung des auf den Gasverteilerböden aufliegenden Materials durch das Reduktionsgas wird der vom Reduktionsgas in einer Menge von etwa 150 g/Nm³ mitgeführte Staub, der hauptsächlich aus Koks, verkokten Kohlepartikeln und - bei der nachstehend noch erläuterten Führung des Reduktionsgases über ein Kalzinierungsaggregat - kalzinierten Zuschlagpartikeln besteht, insbesondere im Bereich der unteren Schüttungen die Konzentration der zur Agglomeration neigenden feinen Eisenschwammpartikel verringern. Bei bekannten Hochofen- und anderen metallurgischen Prozessen ist dieser Staub dagegen sehr nachteilig.

Das erfindungsgemäße Verfahren verarbeitet somit ohne Pelletier- oder Sinteranlagen unmittelbar feinkörniges oder staubförmiges Erz, wobei die Anwesenheit auch grobkörniger Erzstücke von Bedeutung ist, weshalb auch Mahlanlagen für grobes Erz entbehrlich sind.

Daß eine sehr starke Verringerung der Konzentration der feinen Eisenschwammpartikel im unteren Bereich des Reduktionsaggregats stattfindet, zeigen die beiden folgenden Beispiele, welche sich auf eine Anlage mit einer Leistung von 50 t/h Roheisen bzw. 75 t/h Eisenerz, bzw. 55,5 t/h Eisenschwamm beziehen.

Beim ersten Beispiel wird ein Verhältnis von Fein- zu Groberz von 50:50 angenommen, sowie eine Zuschlagsmenge von 0,25 t/t Erz, ein Verhältnis von feinen zu groben Zuschlägen von 50:50 und ein Kalzinierungsgrad von 80%. Der Verbrauch von Kohlenstoffträgern hängt sehr stark davon ab, in welchem Verhältnis Koks und Kohle angesetzt werden und in welcher Qualität sie vorliegen. Bei einem Koksanteil von 20% und einer mittleren Qualität beider Komponenten ist mit einem Gesamtverbrauch von 48 t/h der Kohlenstoffträger zu rechnen. Die Oxidationsmittelmenge wird ca. 23000 Nm³/h reinen Sauerstoff, 2500 Nm³/h Druckluft für den Schmelzbereich und ca. 12000 Nm³/h Heißluft für den Gasbereich betragen. Daraus ergibt sich eine Reduktionsgasmenge von ca. 88000 Nm³/h, bzw. 1170 Nm³/t Erz bzw. 1585 Nm³/t Eisenschwamm, mit einem Staubgehalt von ca. 150 g/Nm³ Reduktionsgas. Es wird zudem angenommen, daß bei Reduktion des groben Erzes davon bis zu ca. 20% zu feinem Erz mit einer Partikelgröße unter 2 mm zerfallen.

Aus vorstehenden Annahmen ergibt sich, daß 600 kg feine Eisenschwammpartikel durch 240 kg Staub aus dem Reduktionsgas, 100 kg feine und 100 kg grobe kalzinierte Zuschläge, sowie durch 400 kg grobe Eisenschwammpartikel, also mit 840 kg anderen, nicht zur Agglomeration neigenden Stoffen in der Konzentration verringert werden.

Bei einem Verhälnis von Fein- zu Groberz von 70:30 bleibt die Zuschlagsmenge und ihr Verhältnis wie im vorigen Beispiel. Die Menge der Kohlenstoffträger wird ca, 49,5 t/h betragen. Die Sauerstoffmenge von 23000 Nm³/h und die Druckluftmenge von 2500 Nm³/h im Schmelzbereich können beibehalten und die Heißwindmenge zum Gasbereich des modifizierten Hochofens auf ca. 16000 Nm³/h erhöht werden. Daraus ergibt sich eine Reduktionsgasmenge von 94000 Nm³/h bzw. 1250 Nm³/t Erz bzw. 1690 Nm³/t Eisenschwamm, mit einem Staubgehalt von ca. 170 q/Nm³ Reduktionsgas. In diesem Beispiel werden 750 kg feine Eisenschwammpartikel mit ca. 290 kg Staub und je 100 kg feinen und groben Zuschlägen und mit ca. 250 kg grober, vorreduzierten Erzpartikeln, also mit insgesamt 740 kg anderen, nicht zur Agglomeratbildung neigenden Teilchen in ihrer Konzentration verringert.

Nach einer besonders vorteilhaften Ausführungsform werden zumindest über den auf den obersten Gasverteilerboden folgenden Gasverteilerböden die Erze und gegebenenfalls die Zuschlagstoffe jeweils der mechanischen Einwirkung einer Förder- und Lockerungseinrichtung ausgesetzt. Dadurch wird einerseits die Bewegung des Materials, insbesondere auch des feinkörnigen Materials, längs der Gasverteilerböden unterstützt, andererseits wird die Durchmischung des grob- und feinkörnigen Materials und damit die Bindung der Eisenschwammpartikel an die grobkörnigen Metalloxide gefördert und zudem werden schon gebildete Agglomerate wieder zerstört.

Es hat sich als vorteilhaft erwiesen, wenn die grobkörnige Fraktion der Erze und der gegebenenfalls zuzugebenden Zuschlagstoffe eine Partikelgröße von 5 - 30 mm aufweist, vorzugsweise ist die Partikelgröße der grobkörnigen Fraktion auf 5 - 15 mm beschränkt. Die Partikelgröße der fein-körnigen Fraktionen sollte maximal etwa 12 mm, vorzugsweise aber maximal 5 mm betragen.

Die Reduktionsgase können in einem zum Schmelzen des Reduktionsprodukts geeigneten Schmelzaggregat erzeugt werden. Das beim Einschmelzen des Eisenschwamms erzeugte Gas soll ein sehr hohes Reduktionspotential besitzen, damit es als ein sehr wirksames Reduktionsgas für das Metalloxid im Reduktionsaggregat verwendet werden kann. Es ist erforderlich, im oberen Gasraum des Schmelzaggregats eine Temperatur von über 1000°C zu halten. Da im Reduktionsaggregat eine Temperatur des Reduktionsgases von etwa 800 - 900°C, vorzugsweise etwa 850°C benötigt wird, werden die Reduktionsgase vor dem Einbringen in das Reduktionsaggregat auf die erforderliche Temperatur abgekühlt werden. Hierzu können nach einer vorteilhaften Ausführungsform die heißen Reduktionsgase zwischen Schmelzaggregat und Reduktionsaggregat zur Abkühlung über ein Kalzinierungsaggregat geführt werden.

Nach einer weiteren vorteilhaften Ausgestaltung wird dem Kalzinierungsaggregat die feinkörnige Zuschlagsfraktion zugeführt, wobei die Zuschlagsfraktion nach Erhitzung und Kalzinierung unterhalb eines der unteren Gasverteilerböden in den sich unter jedem Gasverteilerboden im Reduktionsaggregat bildenden Gasraum eingeführt wird.

Nach einer anderen Ausgestaltung kann der feinkörnigen, über das Kalzinierungsaggregat geführten Zuschlagsfraktion Koks beigemischt werden, der einerseits dem heißen Reduktionsgas Wärme entzieht und andererseits dadurch vorgewärmt wird. Der Koks gelangt mit den Zuschlägen in das Reduktionsaggregat und wird von dort zusammen mit dem Reduktionsprodukt in das Schmelzaggregat ausgetragen.

Die Temperatur der Reduktionsgase im Kalzinierungsaggregat wird durch Wärmeabgabe an die in das Kalzinierungsaggregat in Abhängigkeit von der gemessenen Gastemperatur eingegebene Menge der Zuschlagstoffe und des gegebenenfalls beigemischten Kokses geregelt.

Die Temperatur in der Leitungsverbindung zwischen dem Schmelzaggregat und dem Kalzinierungsaggregat, sowie in einem Teil des Kalzinierungsaggregats sollte auf einer Temperatur gehalten werden, die zur Krackung des Teers ausreicht, der in den aus dem Schmelzaggregat im Gas mitgerissenen Partikeln der Kohlenstoffträger enthalten ist.

Vorzugsweise wird die Durchsatzleistung des Reduktionsaggregats durch Steuerung der Material zugabe in Abhängigkeit vom gemessenen Niveau der obersten Schüttung und durch Steuerung der Austragsgeschwindigkeit mittels einer Austragschnecke am unteren Ende des Reduktionsaggregats geregelt, wobei das Verhältnis der einzelnen Fraktionen im vorgegebenen, der Reduktionsgasmenge und anderen Prozeßparametern angepaßten Verhältnis gehalten wird.

Das aus dem Reduktionsaggregat ausgetragene Reduktionsprodukt kann z.B. in eine Heiß-Brikettieranlage überführt und in dieser brikettiert werden. Vorzugsweise wird das aus dem Reduktionsaggregat ausgetragene Reduktionsprodukt in einen modifizierten Hochofen eingebracht und eingeschmolzen, in dem das Materialniveau durch Niveauregelung auf einem bezogen auf die Heißwindebene um 45 - 75 % abgesenkten Niveau gehalten wird.

Damit ergibt sich die Möglichkeit einer kostengünstigen industriellen Realisierbarkeit des Verfahrens, da bereits bestehende Hochofenanlagen zum Einschmelzen des Reduktionsprodukts und zur Erzeugung des Reduktionsgases nach einigen Anpassungsmodifikationen eingesetzt werden können, so daß kostspielige Elemente des Aggregats, wie der Hochofenbehälter, Kühlung, Herd, Abstich einschließlich Entstaubung, sowie Gaswäsche und Wassersystem weiterverwendet werden können. Dadurch werden nicht nur die Investitionskosten, sondern auch die Produktionskosten bei einer bestehenden Hochofenanlage stark reduziert, da sie in einer kürzeren Zeit umgebaut werden kann. Da der modifizierte Hochofen an Stelle der Erze mit Eisenschwamm beschickt wird, welcher nicht mehr reduziert, sondern nur eingeschmolzen werden muß, kann das Materialniveau im Schmelzaggregat - wie erwähnt - abgesenkt werden.

Der modifizierte Hochofen muß um einige Anschlüsse und Zugabestellen erweitert sein, um apparativ und prozeßtechnisch den neuen Anforderungen zu genügen.

Dem Schmelzaggregat wird als Kohlenstoffträger Kohle oder ein Gemisch aus Kohle und Koks zugeführt.

Der als Oxidationsmittel beim Hochofen übliche Heißwind wird bei der modifizierten, dem erfindungsgemäßen Verfahren angepaßten Betriebsweise zumindest größtenteils durch Sauerstoff oder eine Sauerstoff-Druckluftmischung ersetzt. Dabei wird vorzugsweise ein Teil des Oxidationsmittels als Heißwind im oberen Gasraum des modifizierten Hochofens zugegeben und die Hauptmenge des Oxidationsmittels wird vorzugsweise als Sauerstoff-Druckluftmischung über Düsen in den Schmelzbereich des Hochofens eingeblasen. Bei einem Verhältnis von Fein- zu Groberz von 50:50 nach dem oben erwähnten ersten Beispiel wird der Heißwind mengenmäßig ca. 30 und bei einem Verhältnis von 70:30 gemäß dem zweiten Beispiel ca. 40% betragen.

Bei einer Schmelzleistung von 50 t/h Roheisen, einem Heißwindanteil an der Oxidationsmittelmenge von ca. 30% bzw. 12000 Nm³/h und einer Heißwindtemperatur von ca. 1000°C werden im oberen Teil des modifizierten Hochofens ca. 16,5 GJ/h Wärme zugeführt. Dadurch werden ca. 4700 Nm³/h Sauerstoff bzw. ca. 17% der erforderlichen Gesamtsauerstoffmenge von 27200 Nm³/h durch Sauerstoff aus Druckluft und Heißwind und durch fühlbare Wärme des Heißwinds ersetzt. Bei einem Feinerzanteil von 70% und einer Heißwindmenge von 16000 Nm³/h werden 5700 Nm³/h Sauerstoff bzw. 20 der erforderlichen Gesamtsauerstoffmenge durch Sauerstoff aus Druckluft und Heißwind und durch fühlbare Wärme des Heißwinds ersetzt.

Nach einer weiteren zweckmäßigen Ausgestaltung wird mit zunehmendem Ganganteil der Erze und mit zunehmenden Zuschlags- und Feinerzmengen der Druckluft- bzw. Heißwindanteil der Oxidationsmittel zur Erhöhung des Stickstoffgehalts im Reduktionsgas erhöht.

Der modifizierte Hochofen wird zweckmäßigerweise mit einem Überdruck von 1 bis 5 bar, vorzugsweise 3 bar, betrieben.

Nach einer weiteren zweckmäßigen Ausgestaltung wird ein Teil des Reduktionsgases aus dem modifizierten Hochofen zum Druckausgleich nach der Abkühlung auf die im Reduktionsaggregat erforderliche Temperatur in den Austragsbereich des Reduktionsaggregats eingebracht.

Vorteilhaft ist es auch, ungekühltes Reduktionsgas vom Gaserzeuger zum Ausgleich von Wärmeverlusten in den mittleren Bereich des Reduktionsaggregats einzuleiten.

Eine andere zweckmäßige Ausführungsform besteht darin, daß dem verbrauchten Reduktionsgas oberhalb der obersten Schüttung im Reduktionsaggregat in einem Gasberuhigungsraum ein Teil des verbliebenen Staubanteils entzogen wird, daß das Reduktionsgas dann einem Zyklon zugeführt und in diesem der größere Teil des restliche Staubs entzogen wird und daß der im Zyklon anfallende Staub in das Reduktionsaggregat zurückgeführt wird.

Nach einer anderen vorteilhaften Variante wird aus einem der Gasräume im oberen Bereich des Reduktionsaggregats ein Teil des Reduktionsgases zum Entzug alkalischer Anteile aus dem Prozeß abgezweigt, entstaubt, in einer Gaswäsche gewaschen, und dann zur Vorheizung der dem modifizierten Hochofen zugeleiteten Druckluft verwendet.

Vorzugsweise erfolgt die Zugabe der feinkörnigen Fraktion der Zuschlagstoffe und gegebenenfalls eines Kohlenstoffträgers über das Kalzinierungsaggregat und eine Dosierschnecke.

Das erfindungsgemäße Verfahren ist nicht auf die Reduktion von Metalloxiden beschränkt. Seine vorteilhaften Eigenschaften zur Verhinderung einer Agglomeratbildung auf der Basis feinkörniger oder staubförmiger und bei thermisch instabilen Materialien läßt sich z.B. auch beim Brennen von Kalk, bei der Teilreduktion von Manganerzen, oder bei ähnlichen Aufgaben einsetzen.

Aufgabe der Erfindung ist deshalb auch die Verbesserung der eingangs erwähnten Vorrichtung, die nicht allein auf die Gewinnung von Roheisen beschränkt ist. Diese Aufgabe wird dadurch gelöst, daß zur Verarbeitung eines zumindest teilweise feinkörnigen Erzmaterials mit gegebenenfalls enhaltenen staubförmigen Anteilen im zweiten Aggregat mehrere kaskadenförmig gestaffelte, schräge, abwechselnd in entgegengesetzter Richtung geneigte, mit Gasdurchtrittsöffnungen versehene Gasverteilerböden angeordnet sind, wobei oberhalb eines jeden Bodens mindestens eine antreibbare, entlang der Bodenschräge abwärts fördernde und materiallockernde Fördervorrichtung angeordnet ist, und daß der Materialeinlaß oberhalb der obersten Schüttung angeordnet und mit einer Dosiervorrichtung versehen ist.

Vorzugsweise besteht die Fördervorrichtung aus bis zu fünf Förderschnecken.

Die Anwendung von Förderschnecken bietet den Vorteil, daß von der Schnecke an deren Anfang Material aus dem kaum vom Gas durchströmten und deshalb als Sedimentationszone für die feinen Partikel dienenden, über der Schnecke gelegenen Übergangsbereich der Schüttung vom darüber befindlichen Gasverteilerboden eingezogen wird, wodurch das durch den Reduktionsgasstrom in die obere Schicht der Schüttung geförderte staubförmige oder feinkörnige Material wieder nach unten bewegt und mit dem übrigen Material vermischt und einem schnelleren Durchlaufen der zur vollständigen Reduktion eine viel größere Verweilzeit benötigenden gröberen Partikel durch das Aggregat entgegengewirkt wird.

Diesem Zweck dient es auch, daß nach einer vorteilhaften Ausgestaltung im Wirkungsbereich der Fördervorrichtung und in deren Förderrichtung verlaufend wenigstens ein streifenförmiger Bereich eines jeden Gasverteilerbodens frei von Gasdurchtrittsöffnungen gehalten ist, wobei bei der Anwendung von Schnecken wenigstens unterhalb einer Förderschnekke ein von Gasdurchtrittsöffnungen frei gehaltener Bereich angeordnet ist. Es wird dadurch ein strömungsberuhigter Bereich geschaffen, in dem sich die feinen Partikel absetzen und von der Fördervorrichtung nach unten bewegt werden können.

Wegen der hohen Temperaturen ist die Fördervorrichtung kühlbar, vorzugsweise durch eine Wasserkühlung.

Jeder Gasverteilungsboden besteht nach einer zweckmäßigen Ausgestaltung aus mehreren übereinander, zur Bildung der Gasdurchtrittsöffnungen mit Abstand voneinander und zur Abdeckung der Gasdurchtrittsöffnungen in vertikaler Richtung einander überlappend angeordneten Bodenelementen, die vorzugsweise mit einer Wasserkühlung versehen sind.

Eine besonders vorteilhafte Ausgestaltung besteht darin, daß die lichte Weite des zweiten Aggregats oberhalb der obersten Schüttung zur Bildung eines Gasberuhigungsraums vergrößert ist, weil dadurch der Staubaustrag aus dem zweiten Aggregat weiter reduziert werden kann.

Zweckmäßigerweise ist das zweite Aggregat am oberen Ende mit einer Gasabführöffnung versehen, der ein Zyklon zur Staubabscheidung nachgeschaltet ist, wobei der Staubsammelraum des Zyklons über eine Rückführleitung mit dem zweiten Aggregat, vorzugsweise im oberen Bereich, verbunden ist.

Aus den oben bereits erläuterten Gründen ist es besonders vorteilhaft, wenn dem Materialeinlaß des zweiten Aggregats eine Sortiervorrichtung zur Aufteilung des Materials in eine grobkörnige und eine feinkörnige Fraktion vorgeschaltet ist und das zweite Aggregat oberhalb der Schüttung des obersten Bodens mit einem Einlaß für die grobkörnige Fraktion und oberhalb der Schüttung eines der mittleren Böden mit einem Einlaß für die feinkörnige Fraktion versehen ist und beiden Einlässen eine Dosiervorrichtung zugeordnet ist.

Nach einer zweckmäßigen Ausgestaltung ist das erste Aggregat zur Erzeugung von Reduktionsgas aus einem Kohlenstoff-träger geeignet und das zweite Aggregat oberhalb der Schüttung des obersten Bodens mit einem Einlaß für die grobkörnige Fraktion der Metallerze und gegebenenfalls der Zuschlagstoffe versehen, wobei es oberhalb der Schüttung eines der mittleren Böden einen Einlaß für die feinkörnige Fraktion der Metalloxide und gegebenenfalls der Zuschlagstoffe aufweist.

Dabei ist vorzugsweise eine das erste Aggregat mit dem unterhalb des untersten Bodens gelegenen Bereich des zweiten Aggregats verbindende Leitung für das Reduktionsgas über ein Kalzinierungsaggregat geführt, wobei das Kalzinierungsaggregat einen oberen, einer Dosiervorrichtung zugeordneten, mit einem Vorratsbehälter für die feinkörnige Fraktion der Zuschlagstoffe und/oder des Kohlenstoffträgers verbundenen Einlaß und eine Austragsvorrichtung zur Überführung des kalzinierten und/oder vorerhitzten Materials aufweist und die Austragsvorrichtung oberhalb der Schüttung eines der beiden untersten Böden mit dem zweiten Aggregat verbunden ist.

Nach einer bevorzugten Ausführungsform weist das Kalzinierungsaggregat zwischen dem Einlaß und der Austragsvorrichtung mindestens eine Einrichtung zur Gasverteilung auf, die an der vom ersten Aggregat ausgehende Reduktionsgasleitung angeschlossen ist, wobei die zum zweiten Aggregat führende Reduktionsgasleitung das Kalzinierungsaggregat in dessen oberem Bereich verläßt.

Eine besonders vorteilhafte und wirtschaftliche Ausführungsform der Vorrichtung besteht darin, daß das erste Aggregat ein modifizierter Hochofen ist, der am oberen Ende mit der am unteren Ende des zweiten Aggregats angeordneten Austragsvorrichtung verbunden ist und im oberen Abschnitt einen einer Dosiervorrichtung zugeordneten und mit einem in einem unter Überdruck stehenden System angeordneten Vorratsbunker für einen Kohlenstoffträger verbundenen weiteren Einlaß aufweist, und daß der Hochofen im oberen Bereich mit Einblasöffnungen für Heißluft, sowie im unteren Bereich mit Düsen zum Einblasen einer Sauerstoff-Druckluft-Mischung oder von Sauerstoff versehen ist.

Nach einer bevorzugten Ausführungsform weist der Gasberuhigungsraum eine Höhe von etwa 3 bis 5 m aufweist.

Nach einer zweckmäßigen Ausgestaltung ist unterhalb eines jeden Gasverteilungsbodens ein Gasammelraum mit einer mittleren Höhe von 1 bis 3 m vorgesehen.

Es hat sich als günstig erwiesen, wenn die Böden eine Neigung von 5° bis 30° aufweisen.

Vorzugsweise beträgt der spaltbildende Abstand der einzelnen Bodenelemente innerhalb eines Bodens 30 bis 200 mm.

Um eine Agglomeratbildung unterhalb des untersten Bodens vor dem Austragen des Reduktionsprodukts zu vermeiden, besteht noch eine vorteilhafte Ausführungsform darin, daß in dem Bereich zwischen dem untersten Gasverteilerboden und der Austragsvorrichtung mindestens eine Vorrichtung zur Auflockerung des auszutragenden Reduktionsprodukts angeordnet ist, die vorzugsweise eine antreibbare wassergekühlte Lockerungsschnecke ist.

Die zweckmäßigste Anordnung der Förder- und Lockerungsschnecken besteht darin, sie fliegend an der Wandung des zweiten Aggregats zu lagern.

Eine besonders bevorzugte Ausführungsform besteht zur Reduzierung von Wärmeverlusten darin, daß die gekühlten Teile der Bodenelemente, der Fördervorrichtung und der Lockerungsschnecke zumindest teilweise von einer Ummantelung aus hitzebeständigem Material, vorzugsweise aus hitzebeständigem Stahl, umgeben sind.

Noch eine weitere vorteilhafte Ausgestaltung besteht darin, daß im mittleren Bereich des zweiten Aggregats eine zur Ableitung eines kleineren Teils des Reduktionsgases aus dem zweiten Aggregat bemessene Zweigleitung angeschlossen ist, die über mindestens ein Zyklon zu einem Gasreinigungssystem führt, und daß der Staubaustrag des mindestens einen Zyklons mit der Austragsvorrichtung des Kalzinierungsaggregats verbunden ist. Dies bietet die Möglichkeit, einen Teil der Alkalien in Dampfform mit heißem Gas dem Hochofen-Reduktionsaggregat-Kreislauf zu entziehen und so eine Anreicherung von Alkalien im Prozeß und eine dadurch bedingte Bildung von Ansätzen im modifizierten Hochofen zu vermeiden.

Eine weitere sehr vorteilhafte Ausgestaltung ist es dabei, daß von der Reduktionsgasleitung zwischen dem ersten Aggregat und dem Kalzinierungsaggregat ein wahlweise beaufschlagbarer und vom Reduktionsaggregat trennbarer, das Kalzinierungsaggregat umgehender und in die Zweigleitung mündender Bypass ausgeht, so daß der modifizierte Hochofen während eventuell länger dauernder Reparaturarbeiten am zweiten Aggregat mit minimaler Schmelzleistung weiterbetrieben werden kann.

Gegebenenfalls kann der Umbau einer vorhandenen Hochofenanlage mit beengten Raumverhältnissen dadurch erleichtert werden, daß das zweite Aggregat in zwei aufeinanderfolgende Teilaggregate unterteilt ist, deren erstes mit einem Einlaß für die grobkörnige Fraktion und am unteren Ende mit einer Austragsvorrichtung versehen ist, die mit dem oberen Ende des zweiten Teilaggregats verbunden ist, das seinerseits mit einem Einlaß für die feinkörnige Fraktion und einem gegebenenfalls über das Kalzinierungsaggregat führenden Einlaß für feinkörnige, gegebenenfalls mit Koks vermischte Zuschläge, sowie mit einem Austrag für das Reduktionsprodukt versehen ist, und daß der Gasauslaß des zweiten Teilaggregats mit dem Gaseinlaß des ersten Teilaggregats verbunden ist.

Anhand der nun folgenden Beschreibung der in der Zeichnung dargestellten Ausführungsform der Erfindung wird diese näher erläutert.

Es zeigt:
- Fig. 1: eine schematische Darstellung eines mit einem modifizierten Hochofen verbundenen Reduktionsaggregats zur Durchführung des erfindungsgemäßen Verfahrens,
- Fig. 2: eine Fig. 1 entsprechende Darstellung einer vereinfachten Ausführungsform, bei der ein Betrieb des Hochofens während einer Reparatur des Reduktionsaggregats unterbleiben muß und
- Fig. 3: einen schematischen Schnitt durch am unteren Ende eines Gasverteilerbodens benachbarte Bodenelemente.

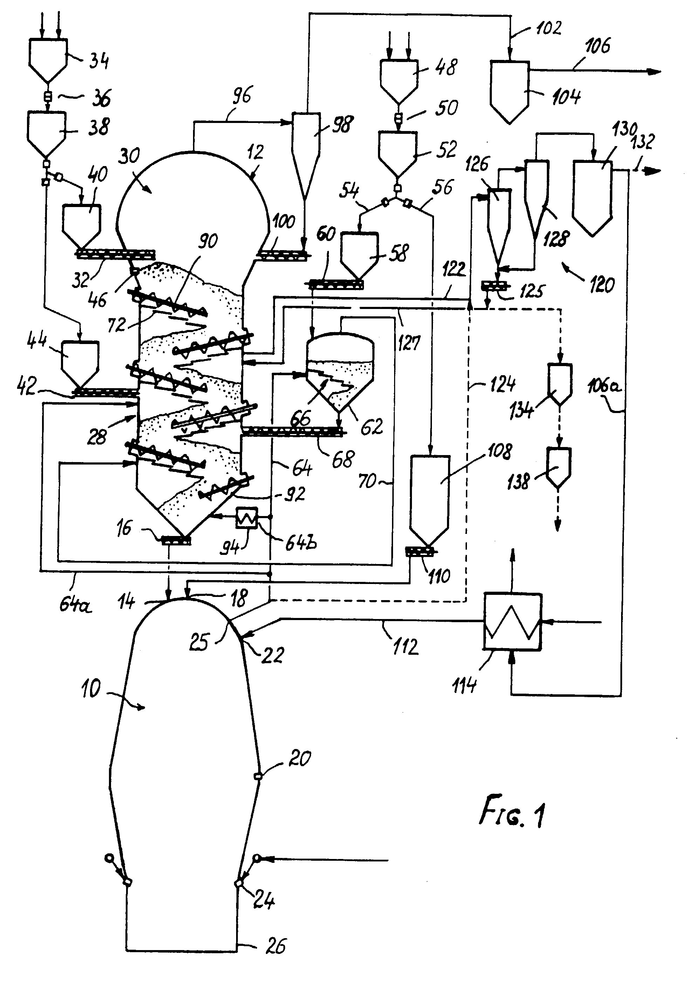

Da eine besonders wirtschaftliche Anwendung des erfindungsgemäßen Verfahrens darin besteht, einen vorhandenen Hochofen nach relativ einfachen Umbauten sowohl als Schmelzaggregat, wie auch zur Erzeugung des im Reduktionsaggregat benötigten Reduktionsgases einzusetzen, zeigt die Fig. 1 einen solchen Hochofen 10, über dem ein Reduktionsaggregat 12 angeordnet ist.

Der Hochofen 10 kann an seinem oberen Ende bei 14 mit dem am unteren Ende des Reduktionsaggregats 12 anfallenden, vorwiegend aus Eisenschwamm bestehenden, über eine antreibbare Austragsschnecke 16 ausgetragenen Material beschickt werden. Ein Kohlenstoffträger, vorzugsweise Kohle, wird dem Hochofen 10 ebenfalls am oberen Ende bei 18 zugeführt. Bei dem modifizierten, dem erfindungsgemäßen Verfahren angepaßten Hochofen ist das Materialniveau bezogen auf die Heißwindebene um 45 bis 75%, vorzugsweise um etwa 60%, abgesenkt und wird über eine Niveaumessung 20 geregelt. Ein Oxidationsmittel wird bei 22 in den oberen Gasraum und bei 24 in den Schmelzbereich des Hochofens 10 eingebracht, und zwar bei 22 Heißluft und bei 24 Sauerstoff oder vorzugsweise eine Sauerstoff-Druckluft-Mischung. Das Verhältnis der Mischung wird der Qualität der Rohstoffe und dem Feinerzanteil angepaßt. In den meisten Fällen wird der Druckluftanteil in der Mischung ca. 10% betragen.

Eine technisch einfachere, wenn auch wirtschaftlich weniger vorteilhafte Variante kann darin bestehen, das gleiche Sauerstoff-Druckluft-Verhältnis sowohl im Schmelz- als auch im Gasbereich des Hochofens 10 anzuwenden.

Das Einblasen von Heißluft führt vorteilhafterweise dazu, daß in den Gasraum des modifizierten Hochofens zusätzliche, fühlbare Wärme und Stickstoff eingebracht wird.

Das heiße Reduktionsgas tritt über den Gasauslaß 25 aus. Der Abstich ist mit 26 bezeichnet.

Das Reduktionsaggregat 12 besteht aus einem als Reduktionsschacht bezeichneten unteren Abschnitt 28 und einem darüber angeordneten, in seiner lichten Weite deutlich erweiterten, als Gasberuhigungsraum bezeichneten Abschnitt 30. Im Übergangsbereich zwischen dem Gasberuhigungsraum 30 und dem Reduktionsschacht 28 mündet eine wassergekühlte Dosierschnekke 32 in das Reduktionsaggregat 12, über die eine grobe Fraktion des zu reduzierenden Erzes und gegebenenfalls der Zuschlagstoffe in das Reduktionsaggregat eingebracht werden kann.

Groberz, Feinerz und gegebenenfalls grobe Zuschlagstoffe werden dem Reduktionsaggregat 12 über einen gemeinsamen Aufgabebehälter 34, eine Material- und Dichtklappe 36 und einen gemeinsamen Zwischenbehälter 38, sowie einen der Dosierschnecke 32 vorgeschalteten Vorratsbunker 40 bzw. einen einer wassergekühlten Feinerzdosierschnecke 42 vorgeschalteten Vorratsbunker 44 zugeführt. Die Drehzahl bzw. Förderleistung der Dosierschnecke 32 wird von der Niveaumessung 46 der obersten Schüttung geregelt. Die Zugabe der Feinerzfraktion mittels der Dosierschnecke 42 wird durch das Verhältnis zum Groberz bestimmt.

Über einen gemeinsamen Aufgabebunker 48 und einen mit diesem über Material- und Dichtklappen 50 verbundenen Zwischenbehälter 52, sowie sich an diesen anschließende getrennte Linien 54 bzw. 56 werden der Anlage feine Zuschlagstoffe, Kohle und/oder Koks zugeführt.

Die Linie 54 führt zu einem Vorratsbehälter 58 für feine Zuschlagstoffe, von dem das Material über eine Dosierschnecke 60 an ein Kalzinierungsaggregat 62 abgegeben wird, dem das heiße, über den Gasauslaß 25 austretende Reduktionsgas über eine Leitung 64 zugeführt wird.

Das im Hochofen 10 erzeugte Reduktionsgas hat eine Temperatur von über 1000°C und muß vor dem Einsatz im Reduktionsaggregat auf ca. 850°C abgekühlt werden. Dabei wird bei einer Schmelzleistung von 50 t/h Roheisen bei einer Reduktionsgasmenge von ca. 88000 Nm³/h eine Gaswärme von ca. 23 GJ/h zum Erhitzen und Kalzinieren von ca. 9 t/h der feinen Zuschlagfraktion und/oder des feinen Kokses im Kalzinierungsaggregat 62 verwendet, wozu im Kalzinierungsaggregat 62 eine geeignete Vorrichtung 66 angeordnet ist, die das Reduktionsgas in die feinen Zuschläge und gegebenen-falls auch in die Feinkoksschüttung einbringt. Falls im Prozeß Koks verwendet wird, kann über die Linie 54 dem Kalzinierungsaggregat auch Feinkoks zugeführt werden, der dann ebenso wie die feinen Zuschläge über eine wassergekühlte Austragsschnecke 68 vorzugsweise oberhalb der untersten Schüttung in den unteren Bereich des Reduktionsschachtes 28 eingebracht wird. Das entsprechend abgekühlte Reduktionsgas wird über eine am oberen Ende des Kalzinierungsaggregats austretende Leitung 70 in den unteren Bereich des Reduktionaggregats 12 eingeleitet. Die Zuschlagmenge wird durch die Gaseintrittstemperatur am Reduktionsaggregat geregelt.

Durch die Wärmeabgabe an die feinen Zuschlagstoffe und die endotherme Kalzinierungsreaktion wird im Kalzinierungsaggregat das heiße Reduktionsgas abgekühlt.

Das Ersetzen der feinkörnigen Zuschlagstoffe durch Feinkoks ist vorteilhaft, weil davon eine größere, fast doppelt so große Menge von ca. 18 t/h eingesetzt werden kann und somit eine weitergehende Reduzierung der Konzentration der feinen Eisenschwammpartikel in den Bereich von 1050 kg Feststoffe zu 600 kg Feineisenschwammpartikel möglich ist, was die Gefahr der Agglomeratbildung bei unverändertem Reduktionspotential des Reduktionsgases reduziert. Bei Verwendung von feinen Zuschlagstoffen wird dagegen der CO₂-Gehalt des Reduktionsgases durch die Umwandlung von Dolomit und Kalkstein in Kalzium- und Magnesiumoxid und CO₂ etwas ansteigen.

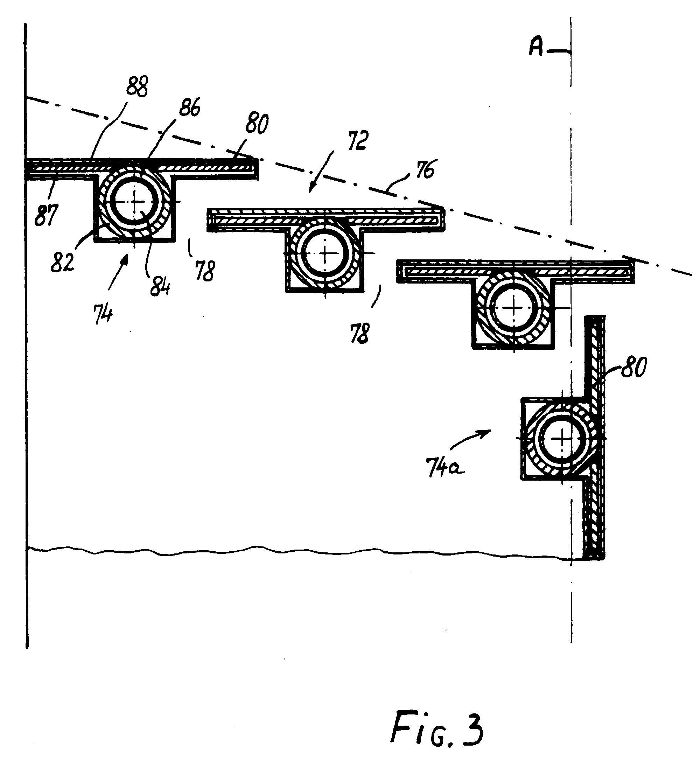

Im Reduktionsschacht 28 sind übereinander mehrere, jeweils entgegengesetzt von außen nach innen schräg abwärts führende Gasverteilerböden 72 angeordnet, die eine kaskadenartige Führung des in den Reduktionsschacht 28 eingebrachten Materials bewirken. Jeder Gasverteilerboden 72 besteht aus einer Anzahl von mit vertikalem Abstand voneinander und einander in vertikaler Richtung überlappend angeordneter, geneigter - oder wie in Fig. 3 beispielsweise gezeigt - mit horizontaler Oberfläche angeordneter Bodenelemente 74, durch deren Staffelung die durch die Linie 76 angedeutete Gesamtneigung des Gasverteilerbodens 72 bestimmt wird. Durch den Abstand der Bodenelemente 74 wird die Spaltbreite der Gasdurchtrittsöffnungen 78 im Gasverteilerboden 72 so bemessen, daß das Gas in die über dem Gasverteilerboden 72 befindliche Schüttung austreten kann, das Material jedoch diese Öffnungen nicht durchquert, sondern jeweils am unteren Ende eines jeden Gasverteilerbodens 72 nach unten fällt.

Das Reduktionsgas durchquert die einzelnen Schüttungen von unten nach oben im Kreuzstrom zum Materialfluß und leistet dabei die Reduktionsarbeit, während es gleichzeitig den größten Teil des mitgebrachten Staubes an die Schüttung abgibt. Dabei erfolgt die Reduktion des Erzes zu Eisenschwamm mit einem Metallisierungsgrad von über 90% durch das Kohlenmonoxid und Wasserstoff enthaltende Reduktionsgas und die Kalzinierung der Zuschläge durch intensiven Kontakt zwischen Gas und Partikeln in den Wirbelschichten bzw. Schüttungen oberhalb der Gasverteilerböden 72. Dabei ist der Verfahrensablauf bei den oberen Gasverteilerböden, die mit der grobkörnigen Fraktion beschickt werden, dem Festbett-Verfahren vergleichbar, während nach der Zugabe der feinkörnigen Fraktion das Verfahren dem Spouting-Bed-Verfahren entspricht.

Im Gegensatz zu bisher üblichen Reduktionsverfahren ist die Staubabgabe an die Schüttungen erwünscht, weil sie zu einer Verringerung der Konzentration der feinen Eisenschwammpartikel und damit zu einer Reduzierung der Gefahr der Agglomeratbildung führt.

Die Bodenelemente 74 sind mit einer Wasserkühlung versehen, die beispielsweise in Fig. 3 dargestellt ist, wobei die vertikale Mittelachse des Aggregats mit A bezeichnet ist. Jedes Bodenelement besteht aus einer Platte 80, die mit einem doppelwandigen Rohr 82 verbunden ist, dessen an einem Ende an die Kühlwasserzuleitung angeschlossener zentraler Raum 84 und dessen am gleichen Ende mit dem Kühlwasserabfluß verbundener Ringraum 86 am anderen Ende miteinander in Verbindung stehen. Die Platte 80 und das Rohr 82 werden von einer thermischen Isolierung 87 aus Mineralwolle oder dergl. umhüllt, die ihrerseits von einer Ummantelung 88 aus hitzebeständigem Stahl umgeben ist. Damit wird eine zu starke Abkühlung des Reduktionsgases über die Kühlung der Gasverteilerböden 72 verhindert.

Am unteren Ende eines jeden Gasverteilerbodens 72 ist ein Bodenelement 74a mit etwa senkrecht angeordneter Platte 80 derart angeordnet, daß es eine nach unten vorspringende Wand bildet, die über der unter dem jeweiligen Gasverteilerboden 72 befindlichen Schüttung einen Gasraum freihält, in dem sich das Reduktionsgas sammeln kann, bevor es durch den Gasverteilerboden 72 nach oben strömt.

Über jedem der Gasverteilerböden 72 ist eine Transport- und Lockerungsvorrichtung vorgesehen, die den Einfluß der Schwerkraft und die durch das aufsteigende Gas verursachte Impulsübertragung und Lockerung unterstützend das Material gleichmäßig weiterbewegt und zugleich auflockert und dadurch der Agglomerierung entgegenwirkt.

Diese Transport- und Lockerungsvorrichtungen bestehen beim gezeigten Beispel aus nahezu flächendeckend über den Gasverteilerböden angeordneten, wassergekühlten Transportschnecken 90, die fliegend an der Wandung des Reduktionsschachtes 28 gelagert sind. Beispielsweise können bis zu fünf Transportschnecken 90 je Gasverteilerboden 72 vorgesehen sein. Neben der Verhinderung der Agglomeratbildung fördern die Transport- und Lockerungsvorrichtungen die Bewegung des Materials über der gesamten Bodenfläche und dadurch eine höhere spezifische Leistung des Aggregats, da bewegungsfreie und nicht vom Reduktionsgas bestrichene Räume vermieden werden.

Eine hohe spezifische Leistung entsteht auch dadurch, daß die grobkörnige Erzfraktion, die zur vollständigen Reduktion die längste Verweilzeit im Reduktionsaggregat benötigt, im Reduktionsaggregat 12 den längsten Weg zurücklegt.

Weil die Schüttung im übergangsbereich von zwei aufeinanderfolgenden Böden überwiegend die feinen Partikel enthält und sich oberhalb des Schneckenanfangs befindet, und weil die Schnecken die Eigenschaft besitzen, am Schneckenanfang das darüber befindliche Material nach unten in den Förderbereich der Schnecke einzuziehen, dienen die Schnecken auch der besseren Vermischung des grobkörnigen mit dem feinkörnigen oder staubförmigen Material, weil letzteres unter dem Einfluß des von unten nach oben gerichteten Reduktionsgasstromes die Neigung besitzt, sich als obere Schicht jeder Schüttung anzusammeln. Da die oberste Schüttung nur aus grobkörnigem Material besteht, kann gegebenenfalls oberhalb des obersten Gasverteilerbodens auf eine Transport- und Lockerungsvorrichtung verzichtet werden.

Um eine Agglomeratbildung in dem in dieser Hinsicht durch die Ansammlung von feinkörnigem Eisenschwamm und relativ hohe Temperatur des eintretenden Reduktionsgases besonders gefährdeten Bereich vor der Austragsschnecke 16 zu verhindern, ist unterhalb des untersten Gasverteilerbodens 72 mindestens eine weitere wassergekühlte Lockerungsschnecke 92 vorgesehen.

Da sowohl ein intensiver Kontakt zwischen Reduktionsgas und Schüttung gewährleistet ist als auch die zugegebene Groberzmenge bzw. die benötigte Verweilzeit zur Reduktion in Abhängigkeit von der Partikelgröße geregelt wird, wird eine hohe Metallisierung des Eisenschwamms bei zugleich hoher Flexibilität der Anlage und Unempfindlichkeit gegenüber Veränderungen von Rohmaterial- und Prozeßparametern erreicht.

Die Zugabe des Feinerzes im mittleren Bereich des Reduktionsaggregats 12 hat die Wirkung, daß das Reduktionsaggregat grössere Wärmemengen benötigt, um im oberhalb der Feinerzzuführung gelegenen Bereich noch eine Gastemperatur von über 750°C für die Reduktion des dort befindlichen Groberzes zu gewährleisten.

Um die Temperatur des Reduktionsgases im Reduktionsaggregat 12 möglichst auf dem optimalen Wert zu halten und Wärmeverluste ausgleichen zu können, ist die Leitung 64 über eine Zweigleitung 64a mit dem mittleren Bereich des Reduktionsaggregats 12 verbunden, wo das über die Leitung 70 zugeführte Gas bereits Wärme abgegeben hat, Zusätzlich kann über eine weitere, über einen Kühler 94 geführte Zweigleitung 64b Reduktionsgas am unteren Ende des Reduktionsaggregats 12 zum Druckausgleich in den Austragsbereich eingeführt werden, um einen sicheren Austrag mittels der Austragsschnecke 16 zu gewährleisten. Auch das Einblasen von Heißluft in den Hochofen 10 wirkt sich vorteilhaft für die Gastemperatur im Reduktionsaggregat 12 aus, weil das im Hochofen 10 erzeugte Reduktionsgas zusätzlich Stickstoff enthält, der die Gasmenge vergrößert und eine wichtige Funktion als Wärmeträger erfüllt.

Der Heißluftanteil wird bei einem Feinerzanteil von 50% ca. ein Drittel der Gesamtoxidationsmittelmenge betragen und kann bei hohem Feinerzanteil von 70% und stark vergrößertem Ganggehalt weiter bis 45% zunehmen, da mit steigendem Feinerzanteil der spezifische Wärmebedarf des Reduktionsaggregats 12 und mithin auch die Reduktionsgasmenge erhöht werden muß, wodurch die Gichtgastemperatur am oberen Ende des Reduktionsaggregats 12 von ca. 300°C auf 500°C ansteigen wird.

Durch den Gasberuhigungsraum 30 kann sich ein Teil des vom Reduktionsgas nach oben beförderten feinkörnigen und staubförmigen Materials auf der obersten Schüttung absetzen. Der verbleibende Rest wird am oberen Ende des Reduktionsaggregats 12 zusammen mit dem verbrauchten Reduktionsgas über eine Leitung 96 ab- und einem Zyklon 98 zugeführt, in dem ein weiterer Teil des Staubes ausgeschieden wird, der über eine Staubaustragschnecke 100 auf die oberste Schüttung im Reduktionsaggregat zurückgeführt wird, von wo aus er mit Hilfe von Fördereinrichtungen dem nächstunteren Gasverteilerboden zugeführt wird. Der Gasaustritt des Zyklons 98 ist über eine Leitung 102 mit einem Gaswäscher 104 verbunden, von wo aus das gereinigte Gas über eine Leitung 106 als Exportgas einer weiteren Nutzung für metallurgische oder andere Prozesse zugeführt werden kann. Bezogen auf die obige Annahme einer Schmelzleistung von 50 t/h Roheisen erhält man eine Exportgasmenge von 88000 Nm³/h mit einem unteren Heizwert von ca. 6600 kJ/Nm³.

Zur Versorgung des Hochofens 10 mit dem Kohlenstoffträger führt die Linie 56 vom Zwischenbehälter 52 zu einem Vorratsbunker 108 und über eine Dosierschnecke 110 zum Hochofen 10.

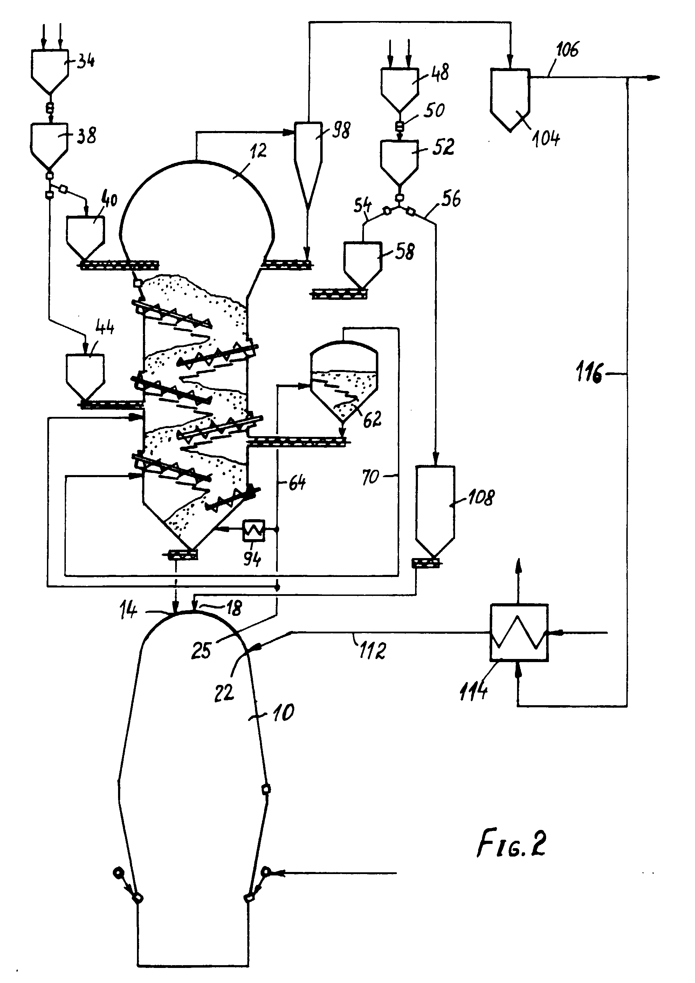

Im vorstehend beschriebenen Umfang entspricht die Anlage nach Fig. 1 auch im wesentlichen der Anlage nach Fig. 2, wobei bei beiden Ausführungsformen die bei 22 in den Hochofen eingeführte Heißluft über eine Leitung 112 zugeführt wird, in die ein Wärmetauscher 114 einbezogen ist, in dem das gereinigte und gewaschene, aus dem Reduktionsaggregat 12 abgeführte Gas verbrannt wird und Wärme an den Heißwind abgibt. Es besteht jedoch ein Unterschied insofern, als bei der Ausführungsform nach Fig. 2 das gereinigte und dem Wärmetauscher 114 zur Verbrennung zugeleitete Gas über eine Zweigleitung 116 der Leitung 106 entnommen wird, während es bei der Ausführungsform nach Fig. 1 einer insgesamt mit 120 bezeichneten, zusätzlichen Gasbehandlungsanlage entnommen wird, die den Vorteil bietet, daß der Hochofen 10 zur Vermeidung von Anfahrschwierigkeiten bei zur Reparatur abgeschaltetem Reduktionsaggregat 12 mit minimaler Schmelzleistung weiterbetrieben werden kann.

Diese zusätzliche Gasbehandlungsanlage 120 besitzt zwei wahlweise einsetzbare Zuleitungen, nämlich eine aus einem Gasraum im mittleren Bereich des Reduktionsaggregats 12 aus diesem herausgeführte Leitung 122 und eine das Kalzinierungsaggregat 62 umgehende, aus der Leitung 64 abzweigende Leitung 124, wobei die Leitung 122 das Reaktionsaggregat 12 und die Leitung 124 den Hochofen 10 direkt mit zwei aufeinanderfolgenden Zyklonen 126 und 128 und einem nachfolgenden Gasreinigungssystem 130 verbindet, von dem aus eine Leitung 132 das gereinigte Gas einer weiteren Nutzung bzw. über eine Zweigleitung 106a dem Wärmetauscher 114 zugeführt werden kann.

Der in den Zyklonen 126 und 128 abgeschiedene Staub wird bei Gaszufuhr zur Anlage 120 über die Leitung 124 vorzugsweise über Gaskühl- und Ausschleusebehälter 134 und 138 abgeführt. Kommt das Gas über die Leitung 122, wird der abgeschiedene Staub über eine Förderschnecke 125 und eine Leitung 127 wieder in den Gasraum zurückbefördert, aus dem die Leitung 122 herausgeführt ist, damit Probleme durch unterschiedlichen Gasdruck vermieden werden.

Die Ableitung eines Teils des Reduktionsgases aus dem mittleren Bereich des Reduktionsaggregats 12 über die Leitung 122 dient der Reduzierung des Gehalts an Alkalien im Ofenkreislauf. Falls bei niedrigem Alkaligehalt der Rohmaterialien ein Abzug von Reduktionsgas über die Leitung 122 aus dem Reduktionaggregat 12 nicht erforderlich ist, kann wie beim Beispiel nach Fig. 2 der Wärmetauscher 114 aus dem vom Reduktionsaggregat über die Leitung 96 abgegebenen Gichtgas beheizt werden, da in diesem Fall ein sog. "Bleeding" des Systems nicht erforderlich ist.

Die Reduktionsleistung des Reduktionsaggregats 12 bzw. die Schmelzleistung des modifizierten Hochofens 10 wird durch die Drehzahl der Austragsschnecke 16 geregelt.

Das Groberz-Feinerz-Verhältnis kann in einem sehr breiten Bereich variiert werden, die Zugabe einer Groberzmenge von etwa 20% der Gesamterzmenge ist jedoch fast unverzichtbar, um den Staubaustrag durch Staubbindung an den Oberflächen der groben Partikel in akzeptablen Grenzen zu halten, der Agglomeratbildung entgegenzuwirken und den Materialfluß durch das Reduktionsaggregat 12 zu verbessern. Falls ausschließlich Feinerz eingesetzt werde soll, sollte die maximale Pertikelgröße mindestens 5 mm, vorzugsweise aber 10 mm betragen und es sollte vorzugsweise durch Absiebung eine Trennung des Feinerzes in eine gröbere und eine feinere Fraktion erfolgen, damit die beiden Fraktionen separat auf unterschiedlichem Niveau in das Reduktionsaggregat 12 eingebracht werden können.

## Patentansprüche

1. Verfahren zur Herstellung von Roheisen aus Eisenerzen, wobei die Eisenerze ein von unten nach oben von heißem, Kohlenmonoxid und Wasserstoff enthaltendem Reduktionsgas durchströmtes Reduktionsaggregat (12) von oben nach unten über eine Folge von schrägen, kaskadenförmig gestaffelten Böden (72) durchwandern und das Reduktionsprodukt am unteren Ende des Reduktionsaggregats (12) entnommen und einem seiner Weiterbehandlung dienenden Aggregat (10) zugeführt wird, und wobei das Reduktionsgas in einem Gaserzeuger (10) durch partielle Oxidation von Kohlenstoffträgern oder Spalten von Ergas oder Erdöl erzeugt wird, wobei im weiteren zur Verarbeitung von teilweise feinkörnigen Eisenerzen mit gegebenenfalls enthaltenen staubförmigen Anteilen das Eisenerz im Reduktionsaggregat (12) über mit Gasdurchtrittsöffnungen (78) versehene Gasverteilerböden (72) mit darüber angeordneten antreibbaren Fördereinrichtungen (90) nach unten geführt wird und das Eisenerz nach der Körnung in Fraktionen sortiert derart in das im Reduktionsaggregat (12) befindliche System der Gasverteilerböden (72) eingebracht wird, daß die grobkörnige Fraktion des Eisenerzes in den oberen Abschnitt des Systems und die feinkörnige Fraktion des Eisenerzes und gegebenenfalls deren staubförmiger Anteil in den mittleren oder in den mittleren und unteren Bereich des Systems eingebracht werden.

2. Verfahren nach Anspruch 1, bei welchem Zuschlagstoffe zugegeben werden, *dadurch gekennzeichnet,* daß auch die Zuschlagstoffe nach der Körnung in Fraktionen sortiert werden und daß die grobkörnige Fraktion der Zuschlagstoffe in den oberen Abschnitt und die feinkörnige Fraktion der Zuschlagstoffe in den unteren Abschnitt des Systems eingebracht wird.

3. Verfahren nach Anspruch 1 oder 2, *dadurch* gekennzeichnet, daß zumindest über den auf den obersten Gasverteilerboden (72) folgenden Gasverteilerböden (72) die Eisenerze und gegebenen-falls die Zuschlagstoffe jeweils der mechanischen Einwir-kung der Fördereinrichtung (90) ausgesetzt werden, welche die Eisenerze lockert.

4. Verfahren nach einem der Ansprüche 1 bis 3, *dadurch gekennzeichnet,* daß die grobkörnige Fraktion der Eisenerze und der gegebenenfalls zuzugebenden Zuschlagstoffe eine Partikelgröße von 5 - 30 mm aufweist.

5. Verfahren nach Anspruch 4, *dadurch gekennzeichnet,* daß die Partikelgröße der grobkörnigen Fraktion auf 5 - 15 mm beschränkt ist.

6. Verfahren nach einem der Ansprüche 3 bis 5, *dadurch gekennzeichnet,* daß die Partikelgröße der feinkörnigen Fraktionen maximal 12 mm beträgt.

7. Verfahren nach Anspruch 6, *dadurch gekennzeichnet,* daß die Partikelgröße der feinkörnigen Fraktionen maximal 5 mm beträgt.

8. Verfahren nach einem der vorhergehenden Ansprüche, *dadurch gekennzeichnet,* daß die Reduktionsgase in einem zum Schmelzen des Reduktionsprodukts geeigneten Schmelzaggregat (10) erzeugt werden.

9. Verfahren nach einem der vorhergehenden Ansprüche, *dadurch gekennzeichnet,* daß die Reduktionsgase vor dem Einbringen in das Reduktionsaggregat (12) auf 800 - 900°C abgekühlt werden.

10. Verfahren nach Anspruch 8, *dadurch gekennzeichnet,* daß die heißen Reduktionsgase zwischen Schmelzaggregat (10) und Reduktionsaggregat (12) zur Abkühlung über ein Kalzinierungsaggregat (62) geführt werden.

11. Verfahren nach den Ansprüchen 3 und 10, *dadurch gekennzeichnet,* daß dem Kalzinierungsaggregat (62) die feinkörnige Zuschlagsfraktion zugeführt wird, und daß die Zuschlagsfraktion nach Erhitzung und Kalzinierung unterhalb eines der unteren Gasverteilerböden (72) in den sich unter jedem Gasverteilerboden (72) im Reduktionsaggregat (12) bildenden Gasraum eingeführt wird.

12. Verfahren nach Anspruch 11, *dadurch gekennzeichnet,* daß der feinkörnigen, über das Kalzinierungsaggregat (62) geführten Zuschlagsfraktion Koks beigemischt wird.

13. Verfahren nach einem der Ansprüche 9 - 12, *dadurch gekennzeichnet,* daß die Temperatur der Reduktionsgase im Kalzinierungsaggregat (62) durch Wärmeabgabe an die in das Kalzinierungsaggregat in Abhängigkeit von der gemessenen Gastemperatur eingegebene Menge der Zuschlagstoffe und des gegebenenfalls beigemischten Kokses geregelt wird.

14. Verfahren nach Anspruch 1 oder 2 und einem der Ansprüche 9 - 13, *dadurch gekennzeichnet,* daß die Temperatur in der Leitungsverbindung zwischen dem Schmelzaggregat (10) und dem Kalzinierungsaggregat (62), sowie in einem Teil des Kalzinierungsaggregats (62) auf einer Temperatur gehalten wird, die zur Krackung des Teers ausreicht, der in den aus dem Schmelzaggregat (10) im Gas mitgerissenen Partikeln der Kohlenstoff-träger enthalten ist.

15. Verfahren nach einem der vorhergehenden Ansprüche, *dadurch gekennzeichnet,* daß die Durchsatzleistung des Reduktionsaggregats (12) durch Steuerung der Materialzugabe in Abhängigkeit vom gemessenen Niveau der obersten Schüttung und durch Steuerung der Austragsgeschwindigkeit am unteren Ende des Reduktionsaggregats (12) geregelt wird, wobei das Verhältnis der einzelnen Fraktionen im vorgegebenen, der Reduktionsgasmenge und anderen Prozeßparametern angepaßten Verhältnis gehalten wird.

16. Verfahren nach Anspruch 1 oder 2, *dadurch gekennzeichnet,* daß das aus dem Reduktionsaggregat (12) ausgetragene Reduktionsprodukt in eine Heiß-Brikettieranlage überführt und in dieser brikettiert wird.

17. Verfahren nach Anspruch 1 oder 2, *dadurch gekennzeichnet,* daß das aus dem Reduktionsaggregat (12) ausgetragene Reduktions-produkt in einen modifizierten Hochofen (10) eingebracht und eingeschmolzen wird, in dem das Materialniveau durch Niveauregelung auf einem bezogen auf die Heißwindebene um 45 - 75 % abgesenkten Niveau gehalten wird.

18. Verfahren nach einem der vorhergehenden Ansprüche, *dadurch gekennzeichnet,* daß dem Schmelzaggregat (10) als Kohlenstoffträger Kohle oder ein Gemisch aus Kohle und Koks zugeführt wird.

19. Verfahren nach einem der Ansprüche 17 oder 18, *dadurch gekennzeichnet,* daß der als Oxidationsmittel übliche Heißwind zumindest größtenteils durch Sauerstoff oder eine Sauerstoff-Druckluftmischung ersetzt wird.

20. Verfahren nach Anspruch 19, *dadurch gekennzeichnet,* daß ein Teil des Oxidationsmittels vorzugsweise als Heißwind im oberen Gasraum des modifizierten Hochofens (10) zugegeben wird und daß die Hauptmenge des Oxidationsmittels vorzugsweise als Sauerstoff-Druckluftmischung über Düsen in den Schmelzbereich des Hochofens (10) eingeblasen wird.

21. Verfahren nach einem der Ansprüche 15 bis 20, *dadurch gekennzeichnet,* daß mit zunehmendem Ganganteil der Erze und mit zunehmenden Zuschlags- und Feinerzmengen der Druckluft- bzw. Heißwindanteil der Oxidationsmittel zur Erhöhung des Stickstoffgehalts im Reduktionsgas erhöht wird.

22. Verfahren nach einem der Ansprüche 17 bis 21, *dadurch gekennzeichnet,* daß der modifizierte Hochofen (10) mit einem Überdruck von 1 bis 5 bar betrieben wird.

23. Verfahren nach Anspruch 22, *dadurch gekennzeichnet,* daß der modifizierte Hochofen (10) mit einem Überdruck von etwa 3 bar betrieben wird.

24. Verfahren nach einem der Ansprüche 22 oder 23, *dadurch gekennzeichnet,* daß ein Teil des Reduktionsgases aus dem modifizierten Hochofen (10) zum Druckausgleich nach der Ab-kühlung auf die im Reduktionsaggregat (12) erforderliche Temperatur in den Austragsbereich des Reduktionsaggregats (12) eingebracht wird.

25. Verfahren nach einem der vorhergehenden Ansprüche, *dadurch gekennzeichnet,* daß ungekühltes Reduktionsgas vom Gaserzeuger (10) zum Ausgleich von Wärmeverlusten in den mittleren Bereich des Reduktionsaggregats (12) eingeleitet wird.

26. Verfahren nach einem der vorhergehenden Ansprüche, *dadurch gekennzeichnet,* daß dem verbrauchten Reduktionsgas oberhalb der obersten Schüttung im Reduktionsaggregat (12) in einem Gasberuhigungsraum (30) ein Teil des verbliebenen Staubanteils entzogen wird, daß das Reduktionsgas dann einem Zyklon (98) zugeführt und in diesem der größte Teil des restlichen Staubs entzogen wird und daß der im Zyklon (98) anfallende Staub in das Reduktionsaggregat (12) zurückgeführt wird.

27. Verfahren nach einem der Ansprüche 10 bis 12 und einem der Ansprüche 17 bis 21, *dadurch gekennzeichnet,* daß aus einem der Gasräume im oberen Bereich des Reduktionsaggregats (12) ein Teil des Reduktionsgases zum Entzug alkalischer Anteile aus dem Prozeß abgezweigt, entstaubt, in einer Gaswäsche gewaschen, und dann zur Vorheizung der dem modifizierten Hochofen (10) zugeleiteten Druckluft verwendet wird.

28. Verfahren nach Anspruch 3 und einem der Ansprüche 10 oder 11, *dadurch gekennzeichnet,* daß die Zugabe der fein-körnigen Fraktion der Zuschlagstoffe und gegebenenfalls eines Kohlenstoffträgers über das Kalzinierungsaggregat (62) und eine Dosierschnecke (68) erfolgt.

29. Vorrichtung zur thermischen und/oder chemischen Behandlung eines leicht zerfallenden Erzmaterials oder zur Herstellung von Roheisen mittels des Verfahrens nach einem der Ansprüche 1 bis 28, mit einem ersten Aggregat (10) zur Erzeugung eines heißen Gases, insbesondere eines Reduktionsgases, und einem zweiten Aggregat (12) zur Aufnahme des thermisch und/oder chemisch zu behandelnden Materials, mit mindestens einem im oberen Abschnitt des zweiten Aggregats (12) angeordneten Materialeinlaß und mindestens einer am unteren Ende des zweiten Aggregats (12) angeordneten Austragvorrichtung (68) zur Entnahme des thermisch und/oder chemisch behandelten Materials, sowie mit mindestens einem im unteren Bereich des zweiten Aggregats (12) angeordneten Einlaß für das heiße Gas, wobei zur Verarbeitung eines zumindest teilweise feinkörnigen Materials mit gegebenenfalls enthaltenen staubförmigen Anteilen im zweiten Aggregat (12) mehrere kaskadenförmig gestaffelte, schräge, abwechselnd in entgegengesetzter Richtung geneigte, mit Gasdurchtrittsöffnungen (78) versehene Gasverteilerböden (72) angeordnet sind und oberhalb eines jeden Bodens (72), mindestens eine antreibbare, entlang der Bodenschräge abwärts fördernde und materiallockernde Fördervorrichtung (90) angeordnet ist, und der Materialeinlaß oberhalb der obersten Schüttung angeordnet und mit einer Dosiervorrichtung (32) versehen ist.

30. Vorrichtung nach Anspruch 29, *dadurch gekennzeichnet,* daß die Fördervorrichtung aus bis zu fünf Förderschnecken (90) besteht.

31. Vorrichtung nach einem der Ansprüche 29 oder 30, *dadurch gekennzeichnet,* daß im Wirkungsbereich der Fördervorrichtung (90) und in deren Förderrichtung verlaufend wenigstens ein streifenförmiger Bereich eines jeden Gasverteilerbodens (72) frei von Gasdurchtrittsöffnungen gehalten ist.

32. Vorrichtung nach den Ansprüchen 30 bis 31, *dadurch gekennzeichnet,* daß wenigstens unterhalb einer Förderschnecke (90) ein von Gasdurchtrittsöffnungen frei gehaltener Bereich angeordnet ist.

33. Vorrichtung nach einem der Ansprüche 29 bis 32, *dadurch gekennzeichnet,* daß die Fördervorrichtung (90) wassergekühlt ist.

34. Vorrichtung nach einem der Ansprüche 29 bis 33, *dadurch gekennzeichnet,* daß jeder Boden (72) aus mehreren übereinander, zur Bildung der Gasdurchtrittsöffnungen (78) mit Abstand voneinander und zur Abdeckung der Gasdurchtrittsöffnungen (78) in vertikaler Richtung einander überlappend angeordneten Bodenelementen (74) besteht.

35. Vorrichtung nach Anspruch 34, *dadurch gekennzeichnet*, daß die Bodenelemente (74) wassergekühlt sind.

36. Vorrichtung nach einem der Ansprüche 29 bis 35, *dadurch gekennzeichnet,* daß die lichte Weite des zweiten Aggregats (12) oberhalb der obersten Schüttung zur Bildung eines Gasberuhigungsraums (30) vergrößert ist.

37. Vorrichtung nach einem der Ansprüche 29 bis 36, *dadurch gekennzeichnet,* daß das zweite Aggregat (12) am oberen Ende mit einer Gasabführöffnung (96) versehen ist, der ein Zyklon (98) zur Staubabscheidung nachgeschaltet ist, und daß der Staubsammelraum des Zyklons (98) über eine Rückführleitung mit dem zweiten Aggregat (12) verbunden ist.

38. Vorrichtung nach Anspruch 37, *dadurch gekennzeichnet,* daß die Rückführleitung mit einer Förderschnecke (100) versehen ist.

39. Vorrichtung nach Anspruch 38, *dadurch gekennzeich*net, daß die Förderschnecke (100) wassergekühlt ist.

40. Vorrichtung nach einem der Ansprüche 29 bis 39, *dadurch gekennzeichnet,* daß dem Materialeinlaß des zweiten Aggregats (12) eine Sortiervorrichtung zur Aufteilung des Materials in eine grobkörnige und eine feinkörnige Fraktion vorgeschaltet ist und daß das zweite Aggregat (12) oberhalb der Schüttung des obersten Bodens mit einem Einlaß für die grobkörnige Fraktion und oberhalb der Schüttung eines der mittleren Böden mit einem Einlaß für die feinkörnige Fraktion versehen ist und daß beiden Einlässen eine Dosiervorrichtung (32, 42) zugeordnet ist.

41. Vorrichtung nach einem der Ansprüche 29 bis 40 zur Herstellung von Roheisen, *dadurch gekennzeichnet,* daß das erste Aggregat (10) zur Erzeugung von Reduktionsgas aus einem Kohlenstoffträger geeignet ist, daß das zweite Aggregat (12) oberhalb der Schüttung des obersten Bodens mit einem Einlaß (32) für die grobkörnige Fraktion der Metallerze und gegebenenfalls der Zuschlagstoffe versehen ist und daß es oberhalb der Schüttung eines der mittleren Böden einen Einlaß (42) für die feinkörnige Fraktion der Metallerze und gegebenenfalls der Zuschlagstoffe aufweist.

42. Vorrichtung nach Anspruch 41, *dadurch gekennzeichnet,* daß eine das erste Aggregat (10) mit dem unterhalb des untersten Bodens gelegenen Bereich des zweiten Aggregats (12) verbindende Leitung (64, 70) für das Reduktionsgas über ein Kalzinierungsaggregat (62) geführt ist, daß das Kalzinierungsaggregat (62) einen oberen, einer Dosiervorrichtung (60) zugeordneten, mit einem Vorratsbehälter (58) für die feinkörnige Fraktion der Zuschlagstoffe und/oder des Kokses verbundenen Einlaß und eine Austragsvorrichtung (68) zur Überführung des kalzinierten und/oder vorerhitzten Materials aufweist, und daß die Austragsvorrichtung (68) oberhalb der Schüttung eines der beiden untersten Böden mit dem zweiten Aggregat (12) verbunden ist.

43. Vorrichtung nach Anspruch 42, *dadurch gekennzeichnet,* daß das Kalzinierungsaggregat (62) zwischen dem Einlaß und der Austragsvorrichtung (68) mindestens eine Einrichtung (66) zur Gasverteilung aufweist, die an der vom ersten Aggregat (10) ausgehende Reduktionsgasleitung (64) angeschlossen ist und daß die zum zweiten Aggregat (12) führende Reduktionsgasleitung (70) das Kalzinierungsaggregat (62) in dessen oberem Bereich verläßt.

44. Vorrichtung nach einem der Ansprüche 40 bis 42, *dadurch gekennzeichnet,* daß das erste Aggregat (10) ein modifizierter Hochofen ist, der am oberen Ende mit der am unteren Ende des zweiten Aggregats (12) angeordneten Austragsvorrichtung (16) verbunden ist und im oberen Abschnitt einen einer Dosiervorrichtung (110) zugeordneten und mit einem in einem unter Überdruck stehenden System angeordneten Vorratsbunker (108) für einen Kohlenstoffträger verbundenen weiteren Einlaß aufweist, und daß der Hochofen (10) im oberen Bereich mit Einblasöffnungen (22) für Heißluft, sowie im unteren Bereich mit Düsen (24) zum Einblasen einer Sauerstoff-Druckluft-Mischung oder von Sauerstoff versehen ist.

45. Vorrichtung nach Anspruch 36, *dadurch gekennzeichnet,* daß der Gasberuhigungsraum (30) eine Höhe von etwa 3 bis 5 m aufweist.

46. Vorrichtung nach einem der Ansprüche 29 bis 45, *dadurch gekennzeichnet,* daß unterhalb eines jeden Gasverteilungsbodens (72) ein Gasammelraum mit einer mittleren Höhe von 1 bis 3 m vorgesehen ist.

47. Vorrichtung nach einem der Ansprüche 29 bis 46, *dadurch gekennzeichnet,* daß die Böden (72) eine Neigung von 5° bis 30° aufweisen.

48. Vorrichtung nach Anspruch 34, *dadurch gekennzeichnet,* daß der spaltbildende Abstand der einzelnen Bodenelemente (74) innerhalb eines Bodens (72) 30 bis 200 mm beträgt.

49. Vorrichtung nach einem der Ansprüche 29 bis 48, *dadurch gekennzeichnet,* daß im zweiten Aggregat (12) mindestens zwei Gasverteilerböden (72) angeordnet sind.

50. Vorrichtung nach einem der Ansprüche 29 bis 49, *dadurch gekennzeichnet,* daß in dem Bereich zwischen dem untersten Gasverteilerboden (72) und der Austragsvorrichtung (16) mindestens eine Vorrichtung (92) zur Auflockerung des auszutragenden Reduktionsprodukts angeordnet ist.

51. Vorrichtung nach Anspruch 50, *dadurch gekennzeichnet,* daß die Auflockerungsvorrichtung eine antreibbare, wassergekühlte Lockerungsschnecke (92) ist.

52. Vorrichtung nach einem der Ansprüche 29 oder 51, *dadurch gekennzeichnet,* daß die Förderschnecken (90) bzw. die Lockerungschnecke (92) fliegend an der Wandung des zweiten Aggregats (12) gelagert sind.

53. Vorrichtung nach einem der Ansprüche 35 oder 39, *dadurch gekennzeichnet,* daß die gekühlten Teile der Bodenelemente (74) der Fördervorrichtung (90) und der Lockerungsschnecke (92) zumindest teilweise von einer Ummantelung (88) aus hitzebeständigem Material umgeben sind.

54. Vorrichtung nach Anspruch 53, *dadurch gekennzeichnet,* daß die Ummantelung (88) aus hitzebeständigem Stahl besteht.

55. Vorrichtung nach einem der Ansprüche 42 oder 44, *dadurch gekennzeichnet,* daß an einen Gasraum im mittleren Bereich des zweiten Aggregats (12) eine zur Ableitung eines kleineren Teils des Reduktionsgases aus dem zweiten Aggregat (12) bemessene Zweigleitung (122) angeschlossen ist, die über mindestens ein Zyklon (126, 128) zu einem Gasreinigungssystem (130) führt, und daß der Staubaustrag des mindestens einen Zyklons (126, 128) über eine Staubaustragvorrichtung (125) zu dem Gasraum zurückführbar ist.

56. Vorrichtung nach Anspruch 55, *dadurch gekennzeichnet,* daß von der Reduktionsgasleitung (64) zwischen dem ersten Aggregat (10) und dem Kalzinierungsaggregat (62) ein wahlweise beaufschlagbarer und vom Reduktionsaggregat (62) trennbarer, das Kalzinierungsaggregat (62) umgehender und in die Zweigleitung (122) mündender Bypass (124) ausgeht.

57. Vorrichtung nach einem der Ansprüche 29 bis 56, *dadurch gekennzeichnet,* daß das zweite Aggregat in zwei aufeinanderfolgende Teilaggregate unterteilt ist, deren erstes mit einem Einlaß für die grobkörnige Fraktion und am unteren Ende mit einer Austragsvorrichtung versehen ist, die mit dem oberen Ende des zweiten Teilaggregats verbunden ist, das seinerseits mit einem Einlaß für die feinkörnige Fraktion und einem gegebenenfalls über das Kalzinierungsaggregat führenden Einlaß für feinkörnige, gegebenenfalls mit Kohlenstoffträger vermischte Zuschläge, sowie mit einem Austrag für das Reduktionsprodukt versehen ist, und daß der Gasauslaß des zweiten Teilaggregats mit dem Gaseinlaß des ersten Teilaggregats verbunden ist.

## Claims

1. Process for producing pig iron from iron ores, in which the iron ores travel from the top downwards through a reduction unit (12) through which a hot reduction gas containing carbon monoxide and hydrogen flows from the bottom upwards via a succession of oblique trays (72) which are staggered in a cascade-like manner, and the reduction product is drawn off at the bottom end of the reduction unit (12) and is fed to a unit (10) serving for further treatment thereof, and the reduction gas being generated in a gas generator (10) by partial oxidation of carbon carriers or by cracking of natural gas or petroleum, whereby further for the purpose of processing partially fine grained iron ores with dust-like portions optionally contained therein, the iron ore is passed downwards in the reduction unit (12) via gas distributor trays (72) having gas passage holes (78) and a drivable conveying device (90) being arranged above, and the iron ore is introduced, after being sorted into fractions according to grain size, into the system of gas distributor trays (72), which is located in the reduction unit (12), in such a way that the coarse fraction of the iron ore is introduced into the top section of the system and the fine fraction of the iron ore and optionally its dust-like portion are introduced into the middle zone or into the middle and bottom zone of the system.

2. Process according to Claim 1, in which additions are added, characterized in that the additions are also sorted into fractions according to grain size and in that the coarse fraction of the additions is introduced into the top section and the fine fraction of the additions is introduced into the bottom section of the system.

3. Process according to Claim 1 or 2, characterized in that at least above the gas distributor trays (72) following the topmost gas distributor tray (72) the iron ores and optionally the additions are in each case subjected to the mechanical action of the conveying device (90) which loosens the iron ores.

4. Process according to any one of Claims 1 to 3, characterized in that the coarse fraction of the iron ores and the additions optionally to be added have a particle size of 5 to 30 mm.

5. Process according to Claim 4, characterized in that the particle size of the coarse fraction is limited to 5 to 15 mm.

6. Process according to any one of Claims 3 to 5, characterized in that the particle size of the fine fractions is at most 12 mm.

7. Process according to Claim 6, characterized in that the particle size of the fine fractions is at most 5 mm.

8. Process according to any one of the preceding claims, characterized in that the reduction gases are generated in a smelting unit (10) suitable for smelting the reduction product.

9. Process according to any one of the preceding claims, characterized in that the reduction gases, prior to being introduced into the reduction unit (12), are cooled to 800 to 900°C.

10. Process according to Claim 8, characterized in that the hot reduction gases between the smelting unit (10) and the reduction unit (12) are passed, in order to be cooled, via a calcining unit (62).

11. Process according to Claims 3 and 10, characterized in that the calcining unit (62) is fed with the fine addition fraction, and in that the addition fraction, after heating and calcining below one of the bottom gas distributor trays (72), is introduced into the gas space forming below each gas distributor tray (72) in the reduction unit (12).

12. Process according to Claim 11, characterized in that the fine addition fraction passed via the calcining unit (62) is admixed with coke.

13. Process according to any one of Claims 9 to 12, characterized in that the temperature of the reduction gases in the calcining unit (62) is controlled by rejection of heat to the amount of the additions which is fed into the calcining unit as a function of the measured gas temperature, and to the optionally admixed coke.

14. Process according to Claim 1 or 2 and any one of Claims 9 to 13, characterized in that the temperature in the connection line between the smelting unit (10) and the calcining unit (62), and in a part of the calcining unit (62) is maintained at a temperature which is sufficient for cracking the tar which is contained in the carbon carrier particles entrained in the gas from the smelting unit (10).

15. Process according to any one of the preceding claims, characterized in that the throughput capacity of the reduction unit (12) is regulated by controlling the material infeed as a function of the measured level of the topmost bed and by controlling the discharge rate at the bottom end of the reduction unit (12), the ratio of the individual fractions being maintained at the given ratio tailored to the quantity of reduction gas and other process parameters.

16. Process according to Claim 1 or 2, characterized in that the reduction product discharged from the reduction unit (12) is transferred to a hot-briquetting installation and is briquetted therein.

17. Process according to Claim 1 or 2, characterized in that the reduction product discharged from the reduction unit (12) is introduced into a modified blast-furnace (10) and is smelted, in which blast-furnace the level of material is maintained, by means of level control, at a level which, in relation to the hot-blast plane, is lowered by 45 bis 75 %.

18. Process according to any one of the preceding claims, characterized in that the smelting unit (10) is fed with coal or a mixture of coal and coke as a carbon carrier.

19. Process according to either Claim 17 or 18, characterized in that the hot blast conventionally used as the oxidant is replaced, at least for the most part, by oxygen or an oxygen/compressed air mixture.

20. Process according to Claim 19, characterized in that part of the oxidant is preferably added as hot blast in the upper gas space of the modified blast-furnace (10) and that the greater part of the oxidant is preferably injected as an oxygen/compressed air mixture via nozzles into the smelting zone of the blast-furnace (10).

21. Process according to any one of Claims 15 to 20, characterized in that, as the gangue proportion of the ores increases and as the amount of addition and fine ore increases, the proportion of compressed air and hot blast, respectively, in the oxidants is increased to increase the nitrogen content in the reduction gas.

22. Process according to any one of Claims 17 to 21, characterized in that the modified blast-furnace (10) is operated at an excess pressure of from 1 to 5 bar.

23. Process according to Claim 22, characterized in that the modified blast-furnace (10) is operated at an excess pressure of approximately 3 bar.

24. Process according to either Claim 22 or 23, characterized in that part of the reduction gas from the modified blast-furnace (10), for the purpose of pressure equalization, after cooling to the temperature required in the reduction unit (12) is introduced into the discharge zone of the reduction unit (12).

25. Process according to any one of the preceding claims, characterized in that uncooled reduction gas from the gas generator (10) is introduced, in order to compensate for heat losses, into the middle zone of the reduction unit (12).

26. Process according to any one of the preceding claims, characterized in that the spent reduction gas above the topmost bed in the reduction unit (12) in a gas calming chamber (30) has part of the remaining dust fraction extracted from it, in that the reduction gas is then fed to a cyclone (98) and the major part of the residual dust is extracted therein and in that the dust produced in the cyclone (98) is recycled to the reduction unit (12).

27. Process according to any one of Claims 10 to 12 and any one of Claims 17 to 21 characterized in that from one of the gas spaces in the top zone of the reduction unit (12) part of the reduction gas, for the purpose of extracting alkaline fractions, is shunted off from the process, dedusted, scrubbed in a gas scrubber and is then used for preheating the compressed air fed to the modified blast-furnace (10).

28. Process according to Claim 3 and either Claim 10 or 11, characterized in that the addition of the fine fraction of the additions, and optionally, of a carbon carrier is carried out via the calcining unit (62) and a proportioning screw (68).

29. Apparatus for the thermal and/or chemical treatment of a readily disintegrating ore material or for producing pig iron by means of the method according to any one of Claims 1 to 28, with a first unit (10) for generating a hot gas, in particular a reduction gas, and a second unit (12) for holding the material to be treated thermally and/or chemically, having at least one material inlet arranged in the top section of the second unit (12) and at least one discharge appliance (68) arranged at the bottom end of the second unit (12) for drawing off the material treated thermally and/or chemically, and having at least one inlet for the hot gas arranged in the bottom zone of the second unit (12), whereby for processing an at least partially fine material with dust-like portions optionally contained therein, there are arranged in the second unit (12) a plurality of oblique gas distributor trays (72), which are staggered in a cascade-like manner, alternately slope in opposite directions and are provided with gas passage holes (78), and there being arranged above each tray (72) at least one drivable conveying device (90) which conveys downwards along the slope of the bottom and loosens the material, and the material inlet is arranged above the topmost bed and is provided with a proportioning appliance (32).

30. Apparatus according to Claim 29, characterized in that the conveying device consists of up to 5 conveyor screws (90).

31. Apparatus according to either Claim 29 or 30, characterized in that in the effective range of the conveying device (90), and running in the conveying direction thereof, at least one strip-shaped zone of each gas distributor tray (72) is kept free of gas passage holes.

32. Apparatus according to Claims 30 to 31, characterized in that at least below one conveyor screw (90) a zone is arranged which is kept free of gas passage holes.

33. Apparatus according to any one of Claims 29 to 32 characterized in that the conveying device (90) is water-cooled.

34. Apparatus according to any one of Claims 29 to 33, characterized in that each tray (72) consists of a plurality of tray elements (74) which are arranged above one another and, to form the gas passage holes (78), are arranged at a distance from one another and, for covering the gas passage holes (78), are arranged so as to overlap one another in a vertical direction.

35. Apparatus according to Claim 34, characterized in that the tray elements (74) are water-cooled.

36. Apparatus according to any one of Claims 29 to 35, characterized in that the internal diameter of the second unit (12) above the topmost bed is enlarged to form a gas calming chamber (30).

37. Apparatus according to any one of Claims 29 to 36, characterized in that the second unit (12) at the top end is provided with a gas discharge port (96) downstream of which there is a cyclone (98) for dust separation, and in that the dust trap of the cyclone (98) is connected to the second unit (12) via a return line.

38. Apparatus according to Claim 37, characterized in that the return line is provided with a conveyor screw (100).

39. Apparatus according to Claim 38, characterized in that the conveyor screw (100) is water-cooled.

40. Apparatus according to any one of Claim 29 to 39, characterized in that upstream of the material inlet of the second unit (12) there is a sorting appliance for dividing the material into a coarse and a fine fraction, and in that the second unit (12) is provided, above the bed of the topmost tray, with an inlet for the coarse fraction and above the bed of one of the middle trays, with an inlet for the fine fraction, and in that assigned to both inlets there is a proportioning appliance (32, 42).

41. Apparatus according to any one of Claims 29 to 40 for produc-ing pig iron, characterized in that the first unit (10) is suitable for generating reduction gas from a carbon carrier, in that the second unit (12) above the bed of the topmost tray is provided with an inlet (32) for the coarse fraction of the metal ores and optionally of the additions, and in that it has, above the bed of one of the middle trays, an inlet (42) for the fine fraction of the metal ores and optionally of the additions.

42. Apparatus according to Claim 41, characterized in that a line (64, 70), which connects the first unit (10) with that zone of the second unit (12) which is located below the bottom-most tray, for the reduction gas is run via a calcining unit (62), in that the calcining unit (62) has a top inlet, which is assigned to a proportioning appliance (60) and connected to a stock vessel (58) for the fine fraction of the additions and/or the coke, and a discharge appliance (68) for transferring the calcined and/or preheated material, and in that the discharge appliance (68) above the bed of one of the two bottom-most trays is connected to the second unit (12).

43. Apparatus according to Claim 42, characterized in that the calcining unit (62) between the inlet and the discharge appliance (68) has at least one device (66) for the purpose of gas distribution, which is connected to the reduction gas line (64) emanating from the first unit (10), and in that the reduction gas line (70) leading to the second unit (12) leaves the calcining unit (62) in the top zone thereof.

44. Apparatus according to any one of Claims 40 to 42, characterized in that the first unit (10) is a modified blast-furnace which, at the top end, is connected to the discharge appliance (16) arranged at the bottom end of the second unit (12), and in the top section has a further inlet, which is assigned to a proportioning appliance (110) and connected to a stock bin (108) which is arranged in a system under excess pressure and is designed for a carbon carrier, and in that the blast-furnace (10) in the top zone is provided with injection orifices (22) for hot air, and in the bottom zone is provided with nozzles (24) for injecting an oxygen/compressed air mixture or oxygen.

45. Apparatus according to Claim 36, characterized in that the gas calming chamber (30) has a height of approximately from 3 to 5 m.

46. Apparatus according to any one of Claims 29 to 45, characterized in that below each gas distributor tray (72) there is provided a gas collection chamber having a mean height of from 1 to 3 m.

47. Apparatus according to any one of Claims 29 to 46, characterized in that the trays (72) have a slope of from 5° to 30°.

48. Apparatus according to Claim 34, characterized in that the gap-forming spacing of the individual tray elements (74) within a tray (72) is from 30 to 200 mm.

49. Apparatus according to any one of Claims 29 to 48, characterized in that there are arranged in the second unit (12) at least two gas distributor trays (72).

50. Apparatus according to any one of Claims 29 to 49, characterized in that there is arranged, in the zone between the bottom-most gas distributor tray (72) and the discharge appliance (16), at least one appliance (92) for loosening the reduction product to be discharged.

51. Apparatus according to Claim 50, characterized in that the loosening appliance is a drivable, water-cooled loosening screw (92).

52. Apparatus according to either Claim 29 or 51, characterized in that the conveyor screws (90) or the loosening screw (92), respectively, are mounted in an overhung manner on the wall of the second unit (12).

53. Apparatus according to either Claim 35 or 39, characterized in that the cooled parts of the tray elements (74), of the conveying device (90) and the loosening screw (92) are surrounded at least in part by a casing (88) of heat-resistant material.

54. Apparatus according to Claim 53, characterized in that the casing (88) consists of heat-resistant steel.

55. Apparatus according to either Claim 42 or 44, characterized in that there is connected, to a gas space in the middle zone of the second unit (12), a branch line (122), which is designed for ducting off a smaller part of the reduction gas from the second unit (12) and which via at least one cyclone (126, 128) leads to a gas purification system (130), and in that the dust discharge of the at least one cyclone (126, 128) can be recycled to the gas space via a dust discharge appliance (125).

56. Apparatus according to Claim 55, characterized in that there emanates, from the reduction gas line (64) between the first unit (10) and the calcining unit (62), a bypass (124) which is optionally actuable and can be separated from the reduction unit (62), bypasses the calcining unit (62) and opens into the branch line (122).

57. Apparatus according to any one of Claims 29 to 56, characterized in that the second unit is subdivided into two successive subunits, the first of which is provided with an inlet for the coarse fraction and at the bottom end is provided with a discharge appliance which is connected to the top end of the second subunit which in turn is provided with an inlet for the fine fraction and an inlet, which if required runs via the calcining unit, for fine additions, optionally admixed with carbon carrier, and is also provided with a discharge for the reduction product, and in that the gas outlet of the second subunit is connected to the gas inlet of the first subunit.

## Revendications

1. Procédé de production de fonte brute à partir de minerais de fer dans lequel les minerais de fer traversent un groupe de réduction (12) traversé de bas en haut par un gaz réducteur chaud contenant du monoxyde de carbone et de l'hydrogène, de haut en bas au-dessus d'une succession de fonds inclinés, échelonnés en cascade (72) et le produit de réduction est prélevé à l'extrémité inférieure du groupe de réduction (12) et est dirigé vers un groupe (10) servant à son traitement ultérieur et dans lequel le gaz réducteur est produit dans un gazogène (10) par oxydation partielle de composés carbonés ou par craquage de gaz naturel ou de pétrole, dans lequel par la suite pour transformer des minerais de fer en partie à grain fin contenant le cas échéant des portions pulvérulentes, le minerai de fer est guidé vers le bas dans le groupe de réduction (12) par des fonds de distribution du gaz (72) munis d'ouvertures de passage du gaz (78) avec des dispositifs de transport (90) actionnables montés dessus et le minerai de fer est introduit dans le système de fonds de distribution du gaz (72) se trouvant dans le groupe de réduction (12), trié en fractions selon la granulométrie de sorte que la fraction à gros grain du minerai de fer est amenée dans la section supérieure du système et la fraction à grain fin du minerai de fer et le cas échéant sa portion pulvérulente sont introduites dans la partie centrale ou la partie centrale et inférieure du système.

2. Procédé selon la revendication 1 dans lequel on ajoute des produits fondants caractérisé en ce que les produits fondants sont également triés en fractions d'après la granulométrie et en ce que la fraction à gros grain des produits fondants est introduite dans la section supérieure et la fraction à grain fin des produits fondants dans la section inférieure du système.

3. Procédé selon la revendication 1 ou 2 caractérisé en ce que les minerais de fer et le cas échéant les produits fondants sont exposés, du moins au-dessus des fonds de distribution du gaz (72) suivant le fond de distribution du gaz (72) supérieur, à l'action mécanique respective du dispositif de transport (90) qui décompacte les minerais de fer.

4. Procédé selon l'une des revendications 1 à 3 caractérisé en ce que la fraction à gros grain des minerais de fer et des produits fondants ajoutés le cas échéant présente une taille particulaire de 5-30 mm.

5. Procédé selon la revendication 4 caractérisé en ce que la taille particulaire de la fraction à gros grain est limitée à 5 - 15 mm.

6. Procédé selon l'une des revendications 3 à 5 caractérisé en ce que la taille particulaire des fractions à grain fin est au maximum de 12 mm.

7. Procédé selon la revendication 6 caractérisé en ce que la taille particulaire des fractions à grain fin est au maximum de 5 mm.

8. Procédé selon l'une des revendications précédentes caractérisé en ce que les gaz réducteurs sont produits dans un groupe de fusion (10) adapté à la fusion du produit de réduction.

9. Procédé selon l'une des revendications précédentes caractérisé en ce que les gaz réducteurs sont refroidis à 800 - 900°C avant d'être introduits dans le groupe de réduction (12).

10. Procédé selon la revendication 8 caractérisé en ce que les gaz réducteurs chauds entre le groupe de fusion (10) et le groupe de réduction (12) sont passés en vue d'un refroidissement par l'intermédiaire d'un groupe de calcination (62).

11. Procédé selon les revendications 3 et 10 caractérisé en ce que la fraction de fondant à grain fin est dirigée vers le groupe de calcination (62) et en ce que la fraction de fondant est introduite, après chauffage et calcination en dessous d'un des fonds de distribution du gaz (72) inférieurs, dans l'espace de gaz qui se forme sous chaque fond de distribution du gaz (72) dans le groupe de réduction (12).

12. Procédé selon la revendication 11 caractérisé en ce que l'on mélange du coke à la fraction de fondant à grain fin passée par le groupe de calcination (62).

13. Procédé selon l'une des revendications 9 - 12 caractérisé en ce que la température des gaz réducteurs dans le groupe de calcination (62) est réglée par transfert de chaleur vers la quantité de produits fondants et du coke éventuellement ajouté, introduite dans le groupe de calcination en fonction de la température de gaz mesurée.

14. Procédé selon la revendication 1 ou 2 et l'une des revendications 9 - 13 caractérisé en ce que la température dans le conduit de liaison entre le groupe de fusion (10) et le groupe de calcination (62) de même que dans une partie du groupe de calcination (62) est maintenue à une température suffisante pour le craquage du goudron qui est contenu dans les particules du composé carboné entraînées dans le gaz à partir du groupe de fusion (10).

15. Procédé selon l'une des revendications précédentes caractérisé en ce que la capacité de production du groupe de réduction (12) est réglée par commande de l'addition de matériau en fonction du niveau mesuré du chargement supérieur et par commande de la vitesse de décharge à l'extrémité inférieure du groupe de réduction (12), le rapport de chaque fraction étant maintenu au rapport spécifié, adapté à la quantité de gaz réducteurs et aux autres paramètres du processus.

16. Procédé selon la revendication 1 ou 2 caractérisé en ce que le produit de réduction déchargé du groupe de réduction (12) est transféré dans une installation de briquetage à chaud et y est briqueté.

17. Procédé selon la revendication 1 ou 2 caractérisé en ce que le produit de réduction déchargé du groupe de réduction (12) est introduit et refondu dans un haut foumeau modifié (10) dans lequel le niveau du matériau est maintenu par régulation de niveau à un niveau diminué de 45 - 75% par rapport au niveau du vent chaud.

18. Procédé selon l'une des revendications précédentes caractérisé en ce que l'on introduit du charbon ou un mélange de charbon et de coke dans le groupe de fusion (10) en tant que composé carboné.

19. Procédé selon l'une des revendications 17 ou 18 caractérisé en ce que le vent chaud habituel comme agent d'oxydation est au moins pour la plus grande partie remplacé par de l'oxygène ou un mélange oxygène-air comprimé.

20. Procédé selon la revendication 19 caractérisé en ce qu'une partie de l'agent d'oxydation est ajoutée de préférence comme vent chaud dans l'espace de gaz supérieur du haut fourneau modifié (10) et en ce que la quantité principale de l'agent d'oxydation est insufflée de préférence en tant que mélange oxygène-air comprimé par des buses dans la zone de fusion du haut fourneau (10).

21. Procédé selon l'une des revendications 15 à 20 caractérisé en ce qu'avec une partie de gangue croissante des minerais et avec des quantités croissantes de fondants et de minerais fins, on augmente la partie d'air comprimé ou de vent chaud des agents d'oxydation pour accroître la teneur en azote dans le gaz réducteur.

22. Procédé selon l'une des revendications 17 à 21 caractérisé en ce que le haut foumeau modifié (10) est opéré à une surpression de 1 à 5 bars.

23. Procédé selon la revendication 22 caractérisé en ce que le haut fourneau modifié (10) est opéré à une surpression d'environ 3 bars.

24. Procédé selon l'une des revendications 22 ou 23 caractérisé en ce qu'une partie du gaz réducteur du haut foumeau modifié (10) est introduite dans la zone de décharge du groupe de réduction (12) pour compenser la pression après refroidissement à la température nécessaire dans le groupe de réduction (12).

25. Procédé selon l'une des revendications précédentes caractérisé en ce que du gaz réducteur non refroidi est introduit par le gazogène (10) dans la zone centrale du groupe de réduction (12) pour compenser les pertes de chaleur.

26. Procédé selon l'une des revendications précédentes caractérisé en ce qu'une partie de la fraction de poussière résiduelle est enlevée du gaz réducteur consommé au-dessus du chargement supérieur dans le groupe de réduction (12) dans un espace visant à réduire la turbulence du gaz (30), en ce que le gaz réducteur est ensuite introduit dans un dépoussiéreur à cyclone (98) et en ce que dans celui-ci la majeure partie de la poussière résiduelle est enlevée et en ce que la poussière parvenant dans le dépoussiéreur à cyclone (98) est renvoyée dans le groupe de réduction (12).

27. Procédé selon l'une des revendications 10 à 12 et l'une des revendications 17 à 21 caractérisé en ce qu'à partir d'un des espaces de gaz de la zone supérieure du groupe de réduction (12), une partie du gaz réducteur est dérivée, dépoussiérée et lavée dans un laveur de gaz pour éliminer les fractions alcalines du processus de traitement et est ensuite utilisée pour préchauffer l'air comprimé envoyé au haut foumeau modifié (10).

28. Procédé selon la revendication 3 et l'une des revendications 10 ou 11 caractérisé en ce que l'addition de la fraction à grain fin des produits fondants et le cas échéant d'un composé carboné a lieu par l'intermédiaire du groupe de calcination (62) et d'un doseur à vis (68).

29. Dispositif pour traitement thermique et /ou chimique d'un minerai aisément décomposable ou pour production de fonte brute au moyen du procédé selon l'une des revendications 1 à 28 avec un premier groupe (10) pour production d'un gaz chaud, en particulier d'un gaz réducteur et un deuxième groupe (12) pour recevoir le matériau à traiter thermiquement et/ou chimiquement, avec au moins une arrivée de matériau disposée dans la section supérieure du deuxième groupe (12) et au moins un dispositif de décharge (68) disposé à l'extrémité inférieure du deuxième groupe (12) pour prélever le matériau thermiquement et/ou chimiquement traité, ainsi qu'avec au moins une arrivée de gaz chaud disposée dans la partie inférieure du deuxième groupe (12), pour lequel plusieurs fonds de distribution du gaz (72) pour traiter un matériau au moins partiellement à grain fin contenant le cas échéant des fractions pulvérulentes, sont disposés dans le deuxième groupe (12) échelonnés en cascade, inclinés, penchés en altemance dans le sens opposé, munis d'ouvertures de passage du gaz (78) et pour lequel est monté au-dessus de chaque fond (72) au moins un dispositif de transport (90) actionnable, convoyant vers le bas le long du plan incliné du fond et décompactant le matériau et pour lequel l'arrivée de matériau est disposée au-dessus du chargement supérieur et est munie d'un dispositif doseur (32).

30. Dispositif selon la revendication 29 caractérisé en ce que le dispositif de transport (90) peut comporter jusqu'à cinq transporteurs à vis.

31. Dispositif selon l'une des revendications 29 ou 30 caractérisé en ce que dans la zone d'action du dispositif de transport (90) et dans son sens de transport, au moins une zone en forme de bande de chaque fond de distribution du gaz (72) est dépourvue d'ouvertures de passage du gaz.

32. Dispositif selon l'une des revendications 30 à 31 caractérisé en ce qu'au moins en-dessous d'un transporteur à vis (90) est disposée une zone dépourvue d'ouvertures de passage du gaz.

33. Dispositif selon l'une des revendications 29 à 32 caractérisé en ce que le dispositif de transport (90) est refroidi à l'eau.

34. Dispositif selon l'une des revendications 29 à 33 caractérisé en ce que chaque fond (72) est composé de plusieurs éléments de fond (74) disposés l'un sur l'autre, se chevauchant dans le sens vertical pour former les ouvertures de passage du gaz (78), à distance l'un de l'autre et pour recouvrir les ouvertures de passage du gaz (78).

35. Dispositif selon la revendication 34 caractérisé en ce que les éléments de fond (74) sont refroidis à l'eau.

36. Dispositif selon l'une des revendications 29 à 35 caractérisé en ce que l'ouverture intérieure du deuxième groupe (12) est agrandie au-dessus du chargement supérieur pour former un espace visant à réduire la turbulence du gaz (30).

37. Dispositif selon l'une des revendications 29 à 36 caractérisé en ce que le deuxième groupe (12) est muni à l'extrémité supérieure d'une ouverture d'évacuation du gaz (96) à laquelle est raccordée un dépoussiéreur à cyclone (98) pour dépoussiérage et en ce que l'espace de récupération de la poussière du dépoussiéreur à cyclone (98) est raccordé au deuxième groupe (12) par un conduit de renvoi.

38. Dispositif selon la revendication 37 caractérisé en ce que le conduit de renvoi est équipé d'un transporteur à vis (100).

39. Dispositif selon la revendication 38 caractérisé en ce que le transporteur à vis (100) est refroidi à l'eau.

40. Dispositif selon l'une des revendications 29 à 39 caractérisé en ce qu'un dispositif de triage pour séparer le matériau en une fraction à gros grain et une fraction à grain fin, est intercalé à l'avant de l'arrivée de matériau du deuxième groupe (12) et en ce que le deuxième groupe (12) est muni au-dessus du chargement du fond supérieur d'une arrivée pour la fraction à gros grain et au-dessus du chargement d'un des fonds centraux d'une arrivée pour la fraction à grain fin et en ce qu'un dispositif doseur (32, 42) est attribué aux deux arrivées.

41. Dispositif selon l'une des revendications 29 à 40 pour la production de fonte brute caractérisé en ce que le premier groupe (10) est adapté pour la production de gaz réducteur à partir d'un composé carboné, en ce que le deuxième groupe (12) est muni au-dessus du chargement du fond supérieur d'une arrivée (32) pour la fraction à gros grain des minerais de métal et le cas échéant des produits fondants et en ce qu'il présente, au-dessus du chargement d'un des fonds centraux, une arrivée (42) pour la fraction à grain fin des minerais de métal et le cas échéant des produits fondants.

42. Dispositif selon la revendication 41 caractérisé en ce qu'un conduit (64, 70) pour le gaz réducteur reliant le premier groupe (10) à la zone disposée sous le fond inférieur du deuxième groupe (12) est passé par un groupe de calcination (62), en ce que le groupe de calcination (62) présente une arrivée supérieure, attribuée à un dispositif doseur (60), reliée à un réservoir (58) pour la fraction à grain fin des produits fondants et/ou du coke et un dispositif de décharge (68) pour transférer le matériau calciné et/ou préchauffé et en ce que le dispositif de décharge (68) est raccordé au deuxième groupe (12) au-dessus du chargement d'un des deux fonds inférieurs.

43. Dispositif selon la revendication 42 caractérisé en ce que le groupe de calcination (62) présente entre l'arrivée et le dispositif de décharge (68), au moins un système (66) pour distribuer le gaz qui est raccordé au conduit de gaz réducteur (64) sortant du premier groupe (10) et en ce que le conduit de gaz réducteur (70) conduisant au deuxième groupe (12) quitte le groupe de calcination (62) dans sa partie supérieure.

44. Dispositif selon l'une des revendications 40 à 42 caractérisé en ce que le premier groupe (10) est un haut fourneau modifié qui est raccordé à l'extrémité supérieure au dispositif de décharge (16) disposé à l'extrémité inférieure du deuxième groupe (12) et présente dans la section supérieure une autre arrivée attribuée à un dispositif doseur (110) et raccordée à une trémie d'approvisionnement (108) pour un composé carboné disposée dans un système se trouvant en surpression et en ce que le haut fourneau (10) est muni dans la partie supérieure d'ouvertures d'insufflation (22) pour air chaud ainsi que de buses (24) dans la partie inférieure pour insuffler un mélange oxygène-air comprimé ou de l'oxygène.

45. Dispositif selon la revendication 36 caractérisé en ce que l'espace visant à réduire la turbulence du gaz (30) présente une hauteur d'environ 3 à 5 m.

46. Dispositif selon l'une des revendications 29 à 45 caractérisé en ce que sous chaque fond de distribution du gaz (72) est prévu un espace de récupération du gaz avec une hauteur centrale de 1 à 3 m.

47. Dispositif selon l'une des revendications 29 à 46 caractérisé en ce que les fonds (72) présentent une inclinaison de 5° à 30°.

48. Dispositif selon la revendication 34 caractérisé en ce que l'espace formant la séparation de chaque élément de fond (74) à l'intérieur d'un fond (72) est de 30 à 200 mm.

49. Dispositif selon l'une des revendications 29 à 48 caractérisé en ce que dans le deuxième groupe (12) sont disposés au moins deux fonds de distribution du gaz (72).

50. Dispositif selon l'une des revendications 29 à 49 caractérisé en ce que dans la zone située entre le fond de distribution du gaz inférieur (72) et le dispositif de décharge (16) est au moins disposé un dispositif (92) pour décompacter le produit de réduction à décharger.

51. Dispositif selon la revendication 50 caractérisé en ce que le dispositif de décompactage est un décompacteur à vis actionnable, refroidi à l'eau (92).

52. Dispositif selon l'une des revendications 29 ou 51 caractérisé en ce que les transporteurs à vis (90) ou le décompacteur à vis (92) sont suspendus en porte-à-faux à la paroi du deuxième groupe (12).

53. Dispositif selon l'une des revendications 35 à 39 caractérisé en ce que les pièces refroidies des éléments de fond (74) du dispositif de transport (90) et du décompacteur à vis (92) sont au moins partiellement entourées d'un revêtement (88) en matériau réfractaire.

54. Dispositif selon la revendication 53 caractérisé en ce que le revêtement (88) est en acier réfractaire.

55. Dispositif selon l'une des revendications 42 à 44 caractérisé en ce qu'à un espace de gaz dans la partie centrale du deuxième groupe (12) est raccordé un conduit de dérivation (122) dimensionné pour dériver une partie plus faible du gaz réducteur, provenant du deuxième groupe (12), conduit de dérivation qui conduit à un système de nettoyage du gaz (130) par au moins un dépoussiéreur à cyclone (126, 128) et en ce que la décharge de poussière du - au moins un - dépoussiéreur à cyclone (126, 128) peut être renvoyée vers l'espace de gaz par un dispositif d'évacuation de poussière (125).

56. Dispositif selon la revendication 55 caractérisé en ce qu'une dérivation (124) sélectivement alimentable et séparable du groupe de réduction (62), contournant le groupe de calcination (62) et débouchant dans le conduit de dérivation (122), part du conduit de gaz réducteur (64) entre le premier groupe (10) et le groupe de calcination (62).

57. Dispositif selon l'une des revendications 29 à 56 caractérisé en ce que le deuxième groupe est subdivisé en deux groupes partiels successifs dont le premier est muni d'une arrivée pour la fraction à gros grain et d'un dispositif de décharge à l'extrémité inférieure qui est raccordé à l'extrémité supérieure du deuxième groupe partiel, qui est à son tour muni d'une arrivée pour la fraction à grain fin et d'une arrivée passant le cas échéant par le groupe de calcination pour les fondants à grain fin, mélangés le cas échéant avec des composés carbonés, de même que d'une décharge pour le produit de réduction et en ce que la sortie de gaz du deuxième groupe partiel est raccordée à l'arrivée de gaz du premier groupe partiel.
